(19) Europäisches Patentamt / European Patent Office / Office européen des brevets

(11) **EP 4 557 552 A1**

(12) **EUROPEAN PATENT APPLICATION**

(43) Date of publication:
21.05.2025   Bulletin 2025/21

(21) Application number: 24213023.5

(22) Date of filing: **14.11.2024**

(51) International Patent Classification (IPC):
*H02J 1/10* *(2006.01)*        *H02J 3/38* *(2006.01)*

(52) Cooperative Patent Classification (CPC):
**H02J 3/381; H02J 1/102;** H02J 2300/26

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **14.11.2023   CN 202311523227**

(71) Applicant: **Huawei Digital Power Technologies
Co., Ltd.
Shenzhen, Guangdong 518043 (CN)**

(72) Inventors:
• **Qu, Zisen
  Shenzhen, 518043 (CN)**
• **Zhao, Mingquan
  Shenzhen, 518043 (CN)**
• **Zhang, Meiqing
  Shenzhen, 518043 (CN)**
• **Xin, Kai
  Shenzhen, 518043 (CN)**
• **Liu, Yunfeng
  Shenzhen, 518043 (CN)**

(74) Representative: **Gill Jennings & Every LLP
The Broadgate Tower
20 Primrose Street
London EC2A 2ES (GB)**

(54) **POWER CONVERSION SYSTEM AND POWER UPDATE CONTROL METHOD**

(57)    This application discloses a power conversion system and a power update control method. The power conversion system includes N power conversion units and a control unit. The control unit selects a target power conversion unit and a coordinated power conversion unit in a control periodicity, controls an operating mode of the target power conversion unit to be sequentially switched between a PR mode and a MPPT mode, and updates a reference power based on a maximum power obtained in the MPPT mode, for an operating power of the target power conversion unit in the PR mode to be an updated reference power, and the updated reference power is less than or equal to the maximum power. In addition, the control unit controls an operating power of the coordinated power conversion unit to be coordinately adjusted, for a total variation of operating powers of the N power conversion units to be less than a variation threshold. This reduces the total variation of the operating powers of the N power conversion units, and further reduces fluctuation of a total output power and an output voltage of the power conversion unit.

FIG. 1

## Description

## TECHNICAL FIELD

This application relates to the field of power electronics technologies, and in particular, to a power conversion system and a power update control method.

## BACKGROUND

A power supply system is a new power generation system that uses photovoltaic effect of a photovoltaic module to convert solar radiation energy into electric energy. A power converter is a core component in the power supply system, and is mainly responsible for converting a direct current generated by the photovoltaic module into an alternating current, and outputting the alternating current to a power grid. An inverter generally includes a power conversion unit. The power conversion unit is controlled to operate in a maximum power point tracking (MPPT) mode, to track a maximum power of the photovoltaic module, so that the power supply system operates at a maximum power point in real time.

In actual application, a voltage amplitude, a frequency, and a phase on the power grid dynamically fluctuate, and the power conversion unit operates in the MPPT mode. As a result, when the power grid is in a dynamic fluctuation period, the power supply system cannot freely adjust a power for supporting (the power can only be decreased, but cannot be increased). Based on this, power reserve (PR) is performed on an output power of the photovoltaic module, that is, the power conversion unit is controlled to operate in a PR mode, so that the output power of the photovoltaic module is lower than the maximum power. In this way, when the voltage amplitude, the frequency, and the phase on the power grid are in the dynamic fluctuation period, the power supply system can have an output capability of increasing the power and decreasing the power based on a reserved power, to meet a requirement of the power grid. In addition, when operating in the PR mode, the power conversion unit further needs to depend on the MPPT mode to detect the maximum power of the photovoltaic module. As a result, the power conversion unit needs to switch between the PR mode and the MPPT mode, resulting in fluctuation of a total output power and an output voltage of the power conversion unit, and the like. This endangers stability and control precision of the power supply system, and even increases mechanical stress, thermal stress, and the like of a device.

## SUMMARY

Embodiments of this application provide a power conversion system and a power update control method, to accurately update an operating power of a power conversion unit in a PR mode in time through maximum power tracking, and reduce fluctuation of a total output power and an output voltage of the power conversion unit.

According to a first aspect, an embodiment of this application provides a power conversion system. The power conversion system includes N power conversion units and a control unit, and N is an integer and N≥2. A first terminal of each power conversion unit is configured to connect to a direct current power supply or an alternating current power supply, and a second terminal of each power conversion unit is configured to connect to a load, an energy storage unit, a power generation unit, or a power grid. Each power conversion unit is configured to: perform power conversion on a direct current input by the direct current power supply or an alternating current input by the alternating current power supply, and then output a current obtained through the conversion. In addition, the control unit controls, in a control periodicity, operating modes of one or more target power conversion units in the N power conversion units to be switched between a PR mode and a MPPT mode. After the operating mode of the target power conversion unit is switched to the MPPT mode, a maximum power can be obtained in the MPPT mode. Therefore, a reference power can be updated based on the maximum power obtained in the MPPT mode, to obtain an updated reference power, so that the operating power of the target power conversion unit obtained after switching from the MPPT mode to the PR mode can change to the updated reference power, and the updated reference power is less than or equal to the maximum power. In the control periodicity, an operating mode of a coordinated power conversion unit other than the target power conversion unit in the N power conversion units is controlled to remain unchanged, so that the coordinated power conversion unit does not perform mode switching. In addition, the control unit further controls, based on the operating power variation of the target power conversion unit in the mode switching process, an operating power of the coordinated power conversion unit to be coordinately adjusted, for a total variation of operating powers of the N power conversion units to be less than a variation threshold. In this case, the operating power variation coordinately adjusted by the coordinated power conversion unit and the operating power variation of the target power conversion unit in the mode switching process offset each other as much as possible, so that the total variation of the operating powers of the N power conversion units decreases as much as possible. In this way, fluctuation of the total output power and the output voltage of the power conversion unit is reduced, and stability and control precision of the power supply system are improved.

It may be understood that an updated reference power $P_{res}'$ is less than the maximum power $P_{mpp}$, to implement photovoltaic grid-forming. Certainly, in actual application, alternatively, $P_{res}'=P_{mpp}$. This is not limited herein. In addition, the variation threshold may be 0 $\pm\Delta$Pth. When the total variation of the operating powers of the N power conversion units is less than the variation threshold, it may indicate that the total variation of the operating powers of the N power conversion units is as small as possible or ignored. $\Delta$Pth may be a value, for example, 0, 0.01, or 0.05. Alternatively, $\Delta$Pth may be an allowed error range.

In addition, according to the foregoing embodiment, mechanical stress, thermal stress, and the like of a device in the power conversion system can be further reduced, and overall stability of the power conversion system can be improved.

In specific application, when the target power conversion unit operates in the MPPT mode, the corresponding maximum power $P_{mpp}$ may be greater than the original reference power $P_{res}$. Because the updated reference power $P_{res}$' is less than or equal to the maximum power $P_{mpp}$, the following relationship exists between the updated reference power $P_{res}$' and the original reference power $P_{res}$: $P_{res}$'>$P_{res}$, or $P_{res}$'<$P_{res}$, or $P_{res}$'=$P_{res}$.

In some embodiments, the N power conversion units include k target power conversion units and m coordinated power conversion units, k is an integer and $1\leq k\leq N-1$, m is an integer and $1\leq m\leq N-1$, and $2\leq k+m\leq N$. Herein, k may be an appropriate value selected from 1, 2, 3, ..., and N-1, m may also be an appropriate value selected from 1, 2, 3, ..., and N-1, and k and m need to meet $2\leq k+m\leq N$. For example, when k+m=N, the coordinated power conversion units are all the power conversion units other than the target power conversion unit in the N power conversion units. When m+k<N, the coordinated power conversion units are a part of power conversion units other than the target power conversion unit in the N power conversion units. Based on this, power conversion units other than the target power conversion unit and the coordinated power conversion unit in the N power conversion units can operate in the PR mode. It may be understood that values of k in all control periodicities may be the same, or values of k in a part of the control periodicities may be the same, and values of k in a part of the control periodicities may be different, or values of k in all control periodicities may be different. In addition, values of m in all control periodicities may be the same, or values of m in a part of the control periodicities may be the same, and values of m in a part of the control periodicities may be different, or values of m in all control periodicities may be different. In addition, alternatively, in a same control periodicity, m=k, m>k, or m<k.

In some embodiments, an operating power variation of each target power conversion unit in the mode switching process includes a target power variation, and the target power variation is a variation between an instantaneous operating power of the target power conversion unit in the mode switching process and a reference power. In addition, an operating power variation of each coordinated power conversion unit in the coordinated adjustment process includes a coordinated power variation, and the coordinated power variation is a variation between an instantaneous operating power of the coordinated power conversion unit in the coordinated adjustment process and a specified power. A sign of a sum of coordinated power variations is opposite to a sign of a sum of target power variations, and a difference between an absolute value of the sum of the coordinated power variations and an absolute value of the sum of the target power variations is less than the variation threshold. In this way, the total variation of the operating powers of the N power conversion units can be reduced as much as possible or even ignored. In this way, fluctuation of the output power and the output voltage of the power conversion unit is reduced, and stability and control precision of the power supply system are improved.

For example, the difference between the absolute value of the sum of the coordinated power variations and the absolute value of the sum of the target power variations may be a difference or a ratio between the absolute value of the sum of the coordinated power variations and the absolute value of the sum of the target power variations.

In this application, because the sum of the coordinated power variations is related to the sum of the target power variations, each coordinated power variation may be determined based on the sum of the target power variations.

For example, the coordinated power variation corresponding to the $y^{th}$ coordinated power conversion unit in the m coordinated power conversion units is: $-\alpha_y * \Delta P_{msm}$, where $\Delta P_{msm}$ represents the sum of the target power variations, y is an integer, and $y \in [1, m]$. In addition, $\alpha_y$ represents the allocation weight corresponding to the $y^{th}$ coordinated power conversion unit, and $\alpha_y \in [0, 1]$. In this way, the sign of the sum of the coordinated power variations corresponding to the coordinated power conversion units is opposite to the sign of the sum of the target power variations, and $\Delta P_{msm}$ can be allocated to different coordinated power conversion units based on the allocation weight $\alpha_y$.

It may be understood that each allocation weight $\alpha_y$ may be configured in an offline manner or an online manner. In addition, a sum of allocation weights corresponding to the m coordinated power conversion units may be 1, that is, $\sum_{1}^{m} \alpha_y = 1$. It may be understood that, the sum 1 of the allocation weights corresponding to the m coordinated power conversion units is a theoretical value. In specific application, when a test device outputs a power, there may be an error between the sum of the coordinated power variations and the sum of the target power variations. Therefore, the sum of the allocation weights corresponding to the m coordinated power conversion units may be not 1, provided that the sum meets an error allowance case.

In this application, each coordinated power variation can be further determined based on a constant coordinated power specified value. The constant coordinated power specified value $\Delta P_{syn0}$ is a power coordination preset parameter. The constant coordinated power specified value $\Delta P_{syn0}$ may be set as a required fixed value or changed value online or offline, or may be configured based on the maximum power obtained in the MPPT mode, or the like.

For example, a coordinated power variation corresponding to a $z^{th}$ coordinated power conversion unit in the m coordinated power conversion units is $-\alpha_z{}^*\Delta P_{syn0}$, where $\alpha_z$ represents an allocation weight corresponding to the $z^{th}$ coordinated power conversion unit, $\alpha_z \in [0,1]$, and $\Delta P_{syn0}$ represents the constant coordinated power specified value. In this way, the sign of the sum of the coordinated power variations corresponding to the coordinated power conversion units is opposite to the sign of the sum of the target power variations, and $\Delta P_{syn0}$ can be allocated to different coordinated power conversion units based on the allocation weight $\alpha_z$. It may be understood that for an implementation of $\alpha_z$, refer to the implementation of $\alpha_y$. Details are not described herein again.

In some embodiments, each coordinated power variation and each target power variation occur in a same phase. To be specific, an occurrence moment of each coordinated power variation is the same as an occurrence moment of each target power variation, and an end moment of each coordinated power variation is the same as an end moment of each target power variation. In this way, timeliness of coordinated control can be improved, so that when the operating power variation occurs in the target power conversion unit, the coordinated power conversion unit can be controlled in time to coordinately adjust the occurring coordinated power variation, to offset the operating power variation by using the coordinated power variation, so as to reduce fluctuation of the output power and the output voltage of the power conversion unit.

In some embodiments, a phase in which each coordinated power variation occurs is further later than a phase in which each operating power variation occurs, that is, the phase in which each coordinated power variation occurs has an overall delay compared with the phase in which each operating power variation occurs. For example, the phase in which each coordinated power variation occurs is delayed by a delay time parameter $T_{delay}$ compared with the phase in which each operating power variation occurs. That is, an occurrence moment of each coordinated power variation is later than an occurrence moment of each target power variation by the specific delay time parameter $T_{delay}$, and an end moment of each coordinated power variation is also later than an end moment of each target power variation by the specific delay time parameter $T_{delay}$. It may be understood that, because a specific delay occurs in signal transmission in an actual running process of the power conversion system, the delay time parameter $T_{delay}$ may be a delay that occurs during running of the power conversion system, and is not manually set in an online manner or an offline manner. Certainly, to cooperate with the delay of the power conversion system, the delay time parameter $T_{delay}$ may alternatively be manually set to a fixed value or a variable value in an online manner or an offline manner.

In some embodiments, a reference threshold can be further set, so that the sum of the target power variations is compared with the reference threshold, and then the control unit controls, based on a comparison result, the coordinated power conversion unit to perform corresponding operating. For example, in response to that the sum of the target power variations is greater than or equal to the reference threshold, the control unit controls, based on the target power variation of the target power conversion unit in the mode switching process, the operating power of the coordinated power conversion unit to be coordinately adjusted based on the specified power. The target power variation is the variation between the instantaneous operating power of the target power conversion unit in the mode switching process and the reference power.

In this application, that the operating mode of the coordinated power conversion unit remains unchanged means that the coordinated power conversion unit does not switch the operating mode, and operates in one operating mode constantly. For example, the operating mode of the coordinated power conversion unit is the PR mode. In this way, all power conversion units can operate in the PR mode, to implement photovoltaic grid-forming. In addition, a part of the power conversion units is used as the target power conversion unit to perform mode switching between the PR mode and the MPPT mode, and one or a part or all of the rest of the power conversion units are used as the coordinated power conversion unit, and are constantly in the PR mode, so that fluctuation of a total output power and an output voltage of the power conversion unit can be reduced, and stability and control precision of the power supply system can be improved. In addition, when the target power conversion unit operates in the MPPT mode, the operating power of the coordinated power conversion unit in the PR mode is the original reference power. To accordingly update a reference power of the coordinated power conversion unit in the PR mode, after the reference power of the target power conversion unit is updated, the operating power of the coordinated power conversion unit is also switched to the updated reference power. It may be understood that, after the reference power of the target power conversion unit is updated, the reference power of the coordinated power conversion unit in the PR mode does not need to be updated accordingly, but the coordinated power conversion unit in the PR mode is controlled to continue to operate at a reference power of the coordinated power conversion unit in a previous control periodicity.

In some embodiments, the target power conversion unit and/or the coordinated power conversion unit are/is randomly selected. Specifically, the target power conversion unit is randomly selected from the N power conversion units. The coordinated power conversion unit may also be randomly selected from the N power conversion units. In this way, the target power conversion unit and/or the coordinated power conversion unit can be selected in a random selection manner.

For example, a probability of selecting each power conversion unit as the target power conversion unit is the same.

For example, a probability of selecting at least a part of the power conversion units as the target power conversion unit is different.

For example, a probability of selecting each power conversion unit as the coordinated power conversion unit is the same.

For example, a probability of selecting at least a part of the power conversion units as the coordinated power conversion unit is different.

In some embodiments, the target power conversion unit may alternatively be sequentially selected from the N power conversion units. The coordinated power conversion unit may also be sequentially selected from the N power conversion units.

For example, the N power conversion units include a first unit group to an $M^{th}$ unit group that are disposed in sequence, and any unit group includes one or more power conversion units, and M is an integer and $M \geq 2$. A plurality of consecutive cycle periodicities include one or a combination of a first cycle periodicity and a second cycle periodicity. In the first cycle periodicity, one unit group sequentially selected based on a sequence from the first unit group to the $M^{th}$ unit group is used as the target power conversion unit. In addition, in the second cycle periodicity, one unit group sequentially selected based on a sequence from the $M^{th}$ unit group to the first unit group is used as the target power conversion unit.

In some examples, the power conversion unit includes a direct current-direct current (DC-DC) conversion circuit, and the power conversion system further includes a direct current-alternating current (DC-AC) conversion circuit. A first terminal of the direct current-direct current conversion circuit is configured to connect to a direct current power supply, a second terminal of the direct current-direct current conversion circuit is connected to a first terminal of the direct current-alternating current conversion circuit, and a second terminal of the direct current-alternating current conversion circuit is configured to connect to a load or a power grid. For example, the DC-DC conversion circuit is configured to: perform power conversion on a direct current input by the direct current power supply, and output a current obtained through the conversion to the DC-AC conversion circuit. The DC-AC conversion circuit is configured to: convert the input direct current into an alternating current, and output the alternating current to the load or the power grid.

In still some examples, the power conversion unit includes a DC-AC conversion circuit. A first terminal of the direct current-alternating current conversion circuit is configured to connect to a direct current power supply, and a second terminal of the direct current-alternating current conversion circuit is configured to connect to a load, a power grid, or an alternating current system. For example, the DC-AC conversion circuit is configured to: convert a direct current input by the direct current power supply into an alternating current, and then output the alternating current to the load, the power grid, or the alternating current system.

In still some examples, the power conversion unit includes a DC-DC conversion circuit. A first terminal of the direct current-direct current conversion circuit is configured to connect to a direct current power supply, and a second terminal of the direct current-direct current conversion circuit is configured to connect to a load, an energy storage unit, or a power generation unit. For example, the DC-DC conversion circuit is configured to: perform power conversion on a direct current input by the direct current power supply, and then output a current obtained through the conversion to the load, the energy storage unit, or the power generation unit. Alternatively, the DC-DC conversion circuit can be configured to: perform power conversion on a direct current input by the energy storage unit or the power generation unit, and then output a current obtained through the conversion to the direct current power supply.

In still some examples, the power conversion unit includes an alternating current-direct current (AC-DC) conversion circuit. A first terminal of the alternating current-direct current conversion circuit is configured to connect to an alternating current power supply, and a second terminal of the alternating current-direct current conversion circuit is configured to connect to a load, an energy storage unit, or a power generation unit. For example, the AC-DC conversion circuit is configured to: convert an alternating current input by an alternating current power supply into a direct current, and then output the direct current to the load, the energy storage unit, or the power generation unit. Alternatively, the AC-DC conversion circuit can be configured to: convert a direct current input by the energy storage unit or the power generation unit into an alternating current, and then output the alternating current to an alternating current power supply.

In still some examples, the power conversion system includes an AC-DC conversion circuit, and the power conversion system further includes a DC-AC conversion circuit. A first terminal of the alternating current-direct current conversion circuit is configured to connect to an alternating current power supply, a second terminal of the alternating current-direct current conversion circuit is connected to a first terminal of the direct current-alternating current conversion circuit, and a second terminal of the direct current-alternating current conversion circuit is configured to connect to a load or a power grid. For example, the AC-DC conversion circuit is configured to: convert an alternating current input by an alternating current power supply into a direct current, and then output the direct current to the DC-AC conversion circuit. The DC-AC conversion circuit is configured to: convert an input direct current into an alternating current, and then output the alternating current to the load, an energy storage unit, or a power generation unit. Alternatively, the DC-AC conversion circuit can convert an alternating current input by an energy storage unit or a power generation unit into a direct current, and then output the direct current to the AC-DC conversion circuit. The AC-DC conversion circuit can convert an input direct current into an alternating current, and then output the alternating current to an alternating current power supply.

During specific implementation, the control unit may be a field programmable gate array (FPGA), a general-purpose central processing unit (CPU), a general-purpose processor, a digital signal processor (digital signal processor, DSP), or an application-specific integrated circuit (ASIC), or another programmable logic device, a transistor logic device, a hardware component, or any combination thereof. The control unit may implement or execute various example logical blocks, modules, and circuits described with reference to content disclosed in this application. The control unit may alternatively be a combination implementing a computing function, for example, a combination of one or more microprocessors, or a combination of the DSP and a microprocessor.

According to a second aspect, an embodiment of this application further provides a power update control method. The power update control method is applied to a power conversion system. The power conversion system includes N power conversion units, and N is an integer and N≥2. A first terminal of each power conversion unit is configured to connect to a direct current power supply or an alternating current power supply, and a second terminal of each power conversion unit is configured to connect to a load, an energy storage unit, or a power grid. The power conversion unit is configured to: convert a direct current input by the direct current power supply or an alternating current input by the alternating current power supply, and then output a current obtained through the conversion. In addition, the power update control method includes: controlling, in a control periodicity, operating modes of one or more target power conversion units in the N power conversion units to be switched between a PR mode and a MPPT mode, and updating a reference power based on a maximum power obtained in the MPPT mode, for an operating power of the target power conversion unit obtained after switching from the MPPT mode to the PR mode to be an updated reference power, where the updated reference power is less than or equal to the maximum power; and controlling an operating mode of a coordinated power conversion unit other than the target power conversion unit in the N power conversion units to remain unchanged, and controlling, based on an operating power variation of the target power conversion unit in the mode switching process, an operating power of the coordinated power conversion unit to be coordinately adjusted based on a specified power, for a total variation of operating powers of the N power conversion units to be less than a variation threshold.

According to a third aspect, an embodiment of this application further provides a power supply system. The power supply system includes a power conversion system. A first terminal of a power conversion unit in the power conversion system is connected to a direct current power supply or an alternating current power supply, and a second terminal of the power conversion system is configured to connect to a load, an energy storage unit, a power generation unit, or a power grid. In addition, the power conversion system is configured to: convert a direct current input by the direct current power supply or an alternating current input by the alternating current power supply into, and then output a current obtained through the conversion. The power conversion system is the power conversion system according to any one of the first aspect or the embodiments of the first aspect.

If the foregoing power supply system can be a photovoltaic system, the power supply system further includes a photovoltaic module. In addition, a first terminal of the power conversion unit in the power conversion system is connected to the photovoltaic module, and the photovoltaic module is used as the direct current power supply.

In addition, for technical effect of the corresponding solutions in the second aspect and the third aspect, refer to technical effect that can be obtained by using the corresponding solutions in the first aspect. Repeated content is not described in detail.

## BRIEF DESCRIPTION OF DRAWINGS

    FIG. 1 is a diagram of an application scenario of a power supply system according to an embodiment of this application;
    FIG. 2a is a diagram of a structure of a power conversion system according to an embodiment of this application;
    FIG. 2b is a diagram of a specific structure of a power conversion system according to an embodiment of this application;
    FIG. 3 is a diagram of an operating power of a power conversion unit according to an embodiment of this application;
    FIG. 4 is a diagram of an operating mode of a power conversion unit in a control periodicity according to an embodiment of this application;
    FIG. 5 is another diagram of an operating mode of a power conversion unit in a control periodicity according to an embodiment of this application;
    FIG. 6 is another diagram of an operating mode of a power conversion unit in a control periodicity according to an embodiment of this application;
    FIG. 7 is another diagram of an operating mode of a power conversion unit in a control periodicity according to an embodiment of this application;

FIG. 8 is another diagram of an operating mode of a power conversion unit in a control periodicity according to an embodiment of this application;

FIG. 9 is a diagram of a cycle periodicity according to an embodiment of this application;

FIG. 10 is another diagram of an operating power of a power conversion unit according to an embodiment of this application;

FIG. 11 is another diagram of an operating power of a power conversion unit according to an embodiment of this application;

FIG. 12 is another diagram of an operating power of a power conversion unit according to an embodiment of this application;

FIG. 13 is another diagram of an operating power of a power conversion unit according to an embodiment of this application;

FIG. 14 is another diagram of an operating power of a power conversion unit according to an embodiment of this application;

FIG. 15a is a diagram of another structure of a power conversion system according to an embodiment of this application; and

FIG. 15b is a diagram of another structure of a power conversion system according to an embodiment of this application.

Reference numerals:
100: photovoltaic module; 200: power conversion system; 300: grid-connected transformer; 400: power grid; 210_1 to 210_N: power conversion units; 211: DC-DC conversion circuit; 220: direct current-alternating current conversion unit; 212/221: DC-AC conversion circuit; 230: control unit; Bus+: positive direct current bus; and Bus-: negative direct current bus.

## DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. It should be noted that in the descriptions of this application, the term "a plurality of" is understood as "at least two". In addition, it should be understood that in description of this application, terms such as "first", "second", and the like are merely used for distinguishing and description, but should not be understood as indicating or implying relative importance, or should not be understood as indicating or implying a sequence.

It should be noted that identical reference numerals in the accompanying drawings of this application denote identical or similar structures. Therefore, repeated description thereof is omitted. Expressions of positions and directions in this application are described by using the accompanying drawings as an example. However, changes may also be made as required, and all the changes fall within the protection scope of this application. The accompanying drawings in this application are merely used to illustrate relative position relationships and do not represent an actual scale.

To facilitate understanding of the technical solutions provided in embodiments of this application, the following first describes an application scenario of the solutions of this application. A power conversion system provided in embodiments of this application can be used in a power supply system. The power supply system may be a photovoltaic system based on solar power generation or a wind power generation system based on wind power generation, or may be another energy conversion product or a power generation product. The power conversion system is applicable to outputting electric energy to a power grid via a grid-connected transformer, and is also applicable to supplying power to a base station device (for example, a base station device in a remote area with no mains supply or poor mains supply), supplying power to a battery, supplying power to a power generation unit (for example, a motor), or supplying power to various types of power-consuming devices such as household devices (such as a refrigerator and an air conditioner) in the power grid. Alternatively, the power conversion system is also applicable to transmitting electric energy generated by the power generation unit to a direct current power supply or an alternating current power supply, and reversely supplying electric energy to the direct current power supply or the alternating current power supply. Certainly, in actual application, a specific implementation of the power conversion system may be determined based on an actual application scenario. This is not limited herein.

The following provides detailed descriptions by using an example in which the power conversion system provided in embodiments of this application is used in a photovoltaic system scenario. For an operating process in which the power conversion system provided in embodiments of this application is used in another scenario, refer to the operating process in which the power conversion system is used in the power supply system. Repeated parts are not described.

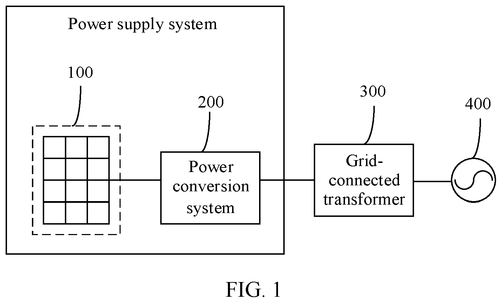

FIG. 1 is a diagram of an application scenario of a power supply system according to an embodiment of this application. Refer to FIG. 1. The power supply system includes a photovoltaic module 100 and a power conversion system 200. An input terminal of the power conversion system 200 is connected to the photovoltaic module 100, an output terminal of the power conversion system 200 is connected to an input terminal of a grid-connected transformer 300, and an output terminal of the grid-connected transformer 300 is connected to a power grid 400 (for example, an alternating current power grid). In specific application, the power conversion system 200 converts a direct current input by the photovoltaic module 100 into an alternating current, and then outputs the alternating current to the grid-connected transformer 300. The grid-connected transformer 300 performs boost conversion or buck conversion, and then outputs a current obtained through the boost conversion or buck conversion to the power grid 400. Certainly, in actual application, the grid-connected transformer 300 may not need to be disposed, and the output terminal of the power conversion system 200 is directly connected to the power grid 400. In addition, the output terminal of the power conversion system may alternatively be connected to a load to supply power to the load. Alternatively, the output terminal of the power conversion system may be connected to an alternating current system.

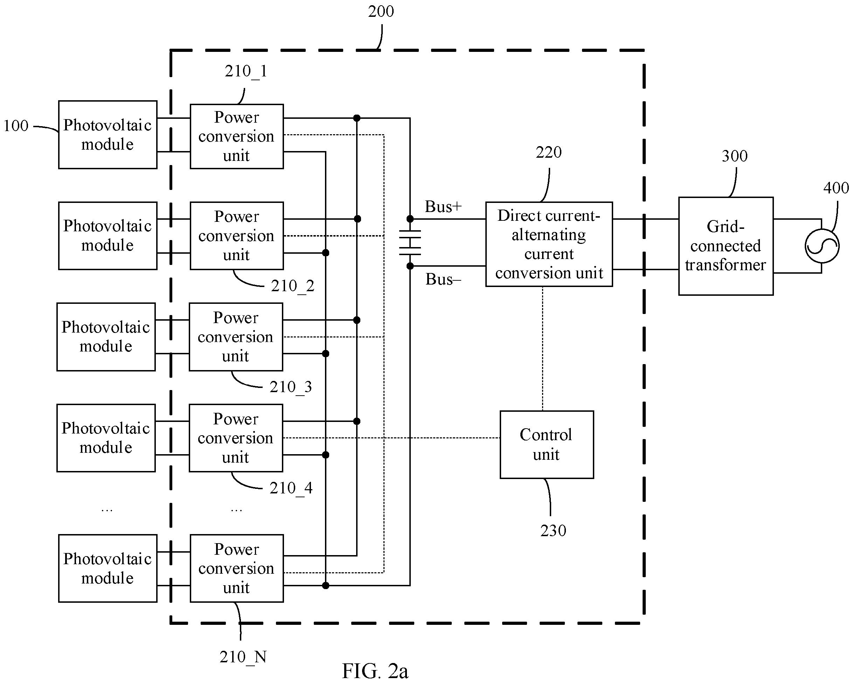

FIG. 2a is a diagram of a structure of the power conversion system according to an embodiment of this application. Refer to FIG. 2a. The power conversion system 200 includes N power conversion units 210_1 to 210_N (N is an integer and N≥2), a direct current-alternating current conversion unit 220, and a control unit 230, so that the power conversion system is set to a photovoltaic inverter of a dual-stage architecture. An input terminal of each of the power conversion units 210_1 to 210_N is connected to the photovoltaic module 100 used as a direct current power supply, and an output terminal of each of the power conversion units 210_1 to 210_N is connected to an input terminal of the direct current-alternating current conversion unit 220 through a direct current bus (including a positive direct current bus Bus+ and a negative direct current bus Bus-). An output terminal of the direct current-alternating current conversion unit 220 is connected to the power grid 400 via the grid-connected transformer 300. In specific application, each of the power conversion units 210_1 to 210_N performs power conversion on a direct current input by the photovoltaic module 100, and then outputs a current obtained through the conversion to the direct current bus (including the positive direct current bus Bus+ and the negative direct current bus Bus-). The direct current-alternating current conversion unit 220 converts the direct current on the direct current bus (including the positive direct current bus Bus+ and the negative direct current bus Bus-) into an alternating current, and then outputs the alternating current to the grid-connected transformer 300. The grid-connected transformer 300 performs boost or buck conversion, and then outputs a current obtained through the conversion to the power grid 400. Alternatively, the output terminal of the direct current-alternating current conversion unit is connected to a load to supply power to the load. It may be understood that N may be set to 2, 3, 4, 5, or more, and a specific value of N may be determined based on a requirement of an actual application scenario. This is not limited herein. Alternatively, one, two, three, or more control units may be disposed, and a specific quantity of control units may also be determined based on the requirement of the actual application scenario. This is not limited herein.

The power conversion unit in embodiments of this application may operate in an MPPT mode, to track a maximum power $P_{mpp}$ output by the photovoltaic module. In this case, an operating power of the power conversion unit is the maximum power $P_{mpp}$. To enable the power supply system in this application to have an output capability of increasing a power and decreasing a power, and implement photovoltaic grid-forming, the power conversion unit needs to operate in a PR mode. When the power conversion unit operates in the PR mode, the operating power of the power conversion unit is a reference power $P_{res}$, and the reference power $P_{res}$ is less than or equal to the maximum power $P_{mpp}$. In addition, an output power of the photovoltaic module is approximately equal to the reference power $P_{res}$ (a device loss is ignored). However, as an environment in which the photovoltaic module is located changes, a power output characteristic of the photovoltaic module changes, and the maximum power $P_{mpp}$ also changes. Therefore, the reference power $P_{res}$ needs to be adjusted accordingly to adapt to the change of the maximum power. Therefore, the power conversion unit may be controlled to operate in the MPPT mode, to detect current maximum power of the photovoltaic module, and then the reference power $P_{res}$ is updated based on the detected current maximum power, to obtain an updated reference power $P_{res}$', so that an operating power of the power conversion unit operating in the PR mode is the updated reference power $P_{res}$'. Based on this, to implement photovoltaic grid-forming, the power conversion unit needs to operate in the PR mode, and update the reference power by detecting the maximum power of the photovoltaic module in the MPPT mode. As a result, the power conversion unit needs to switch between the PR mode and the MPPT mode, resulting in fluctuation of an output power and an output voltage of the power conversion unit, and the like. This endangers stability and control precision of the power supply system, and even increases mechanical stress and thermal stress of a device.

Therefore, in this application, in each control periodicity, the control unit 230 controls operating modes of one or more target power conversion units in the N power conversion units to be switched between the PR mode and the MPPT mode. After the operating mode of the target power conversion unit is switched to the MPPT mode, the maximum power $P_{mpp}$ output by photovoltaic module can be obtained in the MPPT mode. Therefore, the original reference power $P_{res}$ in a $(k-1)^{th}$ control periodicity can be updated based on the maximum power $P_{mpp}$ obtained in the MPPT mode in a $k^{th}$ control periodicity, to obtain the updated reference power $P_{res}$' in the $k^{th}$ control periodicity. Further, in the $k^{th}$ control periodicity, an operating power of the target power conversion unit obtained after switching from the MPPT mode to the PR mode can be changed to the updated reference power $P_{res}$'. When the operating mode of the target power conversion unit is switched between the PR mode and the MPPT mode, the operating power of the target power conversion unit also changes between the original re-

ference power $P_{res}$, the maximum power $P_{mpp}$, and the reference power $P_{res}$'. In this case, an operating power variation of the target power conversion unit occurs in the mode switching process, resulting in fluctuation of a total output power and an output voltage of the power conversion unit, and the like. To reduce fluctuation of the total output power and the output voltage of the power conversion unit, in each control periodicity, the control unit 230 further controls an operating mode of a coordinated power conversion unit other than the target power conversion unit in the N power conversion units to remain unchanged, so that the coordinated power conversion unit does not perform mode switching. In addition, the control unit 230 further controls, based on the operating power variation of the target power conversion unit in the mode switching process, an operating power of the coordinated power conversion unit to be coordinately adjusted, for a total variation of operating powers of the N power conversion units to be less than a variation threshold. In this way, an operating power variation coordinately adjusted by the coordinated power conversion unit and an operating power variation of the target power conversion unit in the mode switching process offset each other as much as possible, so that the total variation of the operating power of the N power conversion units decreases as much as possible. In this way, the fluctuation of the total output power and the output voltage of the power conversion unit is reduced, and stability and control precision of the power supply system are improved.

It may be understood that $P_{res}$'<$P_{mpp}$, to implement photovoltaic grid-forming. Certainly, in actual application, alternatively, $P_{res}$'=$P_{mpp}$. This is not limited herein. In addition, the variation threshold may be $0\pm\Delta Pth$. When the total variation of the operating powers of the N power conversion units is less than the variation threshold, it may indicate that the total variation of the operating powers of the N power conversion units is as small as possible or ignored. $\Delta Pth$ may be a value, for example, 0, 0.01, or 0.05. Alternatively, $\Delta Pth$ may be an allowed error range.

In addition, according to the foregoing embodiment, mechanical stress, thermal stress, and the like of a device in the power conversion system can be further reduced, and overall stability of the power conversion system can be improved.

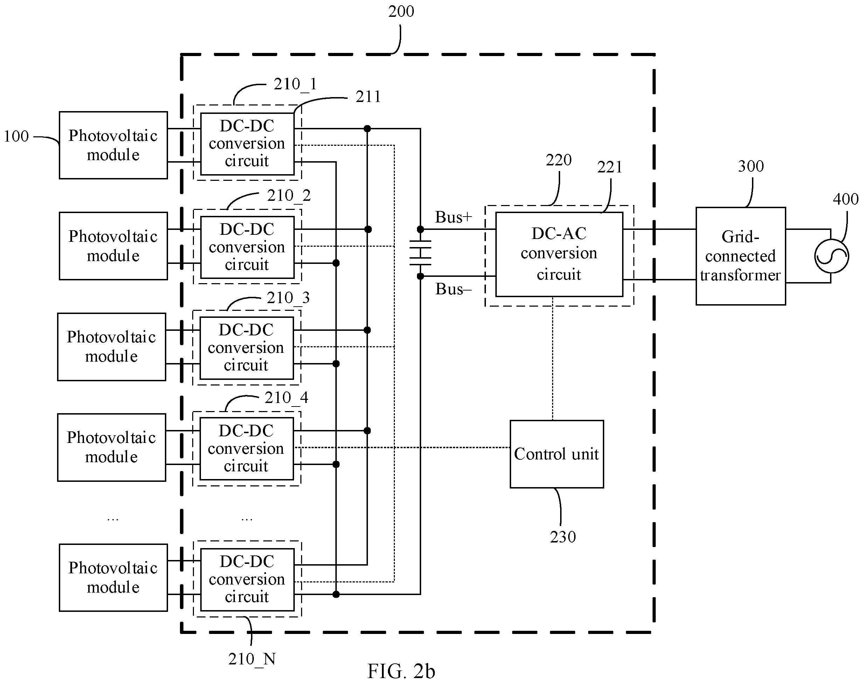

FIG. 2b is a diagram of a specific structure of the power conversion system according to an embodiment of this application. Refer to FIG. 2b. Each of the power conversion units 210_1 to 210_N may be a DC-DC conversion circuit 211, the direct current-alternating current conversion unit 220 may be a DC-AC conversion circuit 221, and the control unit 230 may be a FPGA, a general-purpose CPU, a general-purpose processor, a DSP, an ASIC, or another programmable logic device, a transistor logic device, a hardware component, or any combination thereof. The control unit may implement or execute various example logical blocks, modules, and circuits described with reference to content disclosed in this application. The control unit may be a combination implementing a computing function, for example, a combination of one or more microprocessors, or a combination of the DSP and a microprocessor.

In addition, refer to FIG. 2b. A first terminal of the direct current-direct current conversion circuit 211 is connected to the photovoltaic module 100 used as a direct current power supply, a second terminal of the direct current-direct current conversion circuit 211 is connected to a first terminal of the direct current-alternating current conversion circuit 221 through a direct current bus, and a second terminal of the direct current-alternating current conversion circuit 221 is configured to connect to a power grid. For example, the DC-DC conversion circuit 211 performs power conversion on a direct current input by the photovoltaic module 100, and then outputs a current obtained through the conversion to the DC-AC conversion circuit 221. The DC-AC conversion circuit 221 converts the input direct current into an alternating current, and then outputs the alternating current to the power grid 400. In addition, the second terminal of the direct current-alternating current conversion circuit 221 may alternatively be connected to a load to supply power to the load.

In this application, that the operating mode of the coordinated power conversion unit remains unchanged means that the coordinated power conversion unit does not switch the operating mode, and operates in one operating mode constantly. For example, the operating mode of the coordinated power conversion unit is the PR mode. In this way, all the power conversion units 210_1 to 210_N can operate in the PR mode, to implement photovoltaic grid-forming. In addition, power conversion units 210_1 to 210_k are used as the target power conversion units to perform mode switching between the PR mode and the MPPT mode, and one or a part or all of the power conversion units 210_k+1 to 210_N are used as coordinated power conversion units, and are constantly in the PR mode, so that fluctuation of a total output power and an output voltage of the power conversion unit can be reduced, and stability and control precision of the power supply system can be improved. In addition, when the target power conversion unit operates in the MPPT mode, the operating power of the coordinated power conversion unit in the PR mode is the original reference power $P_{res}$. To accordingly update a reference power of the coordinated power conversion unit in the PR mode, after the reference power of the target power conversion unit is updated, the operating power of the coordinated power conversion unit is also switched to the updated reference power $P_{res}$'. It may be understood that k is an integer, $1\leq k<N$, and k needs to be determined based on an actual application scenario. It may be understood that, after the reference power of the target power conversion unit is updated, the reference power of the coordinated power conversion unit in the PR mode does not need to be updated accordingly, but the coordinated power conversion unit in the PR mode is controlled to continue to operate at a reference power of the coordinated power conversion unit in a previous control periodicity.

In each control periodicity, the N power conversion units include k target power conversion units and m coordinated power conversion units, k is an integer and $1 \leq k \leq N-1$, m is an integer and $1 \leq m \leq N-1$, and $2 \leq k+m \leq N$. Herein, k may be an appropriate value selected from 1, 2, 3, ..., and N-1, m may also be an appropriate value selected from 1, 2, 3, ..., and N-1, and k and m need to meet $2 \leq k+m \leq N$. In this way, at least one target power conversion unit and at least one coordinated power conversion unit are selected from the N power conversion units. For example, when k+m=N, the coordinated power conversion units are all the power conversion units other than the target power conversion unit in the N power conversion units. When m+k<N, the coordinated power conversion units are a part of power conversion units other than the target power conversion unit in the N power conversion units. Based on this, power conversion units other than the target power conversion unit and the coordinated power conversion unit in the N power conversion units can operate in the PR mode. It may be understood that values of k in all control periodicities may be the same, or values of k in a part of the control periodicities may be the same, and values of k in a part of the control periodicities may be different, or values of k in all control periodicities may be different. In addition, values of m in all control periodicities may be the same, or values of m in a part of the control periodicities may be the same, and values of m in a part of the control periodicities may be different, or values of m in all control periodicities may be different. In addition, alternatively, in a same control periodicity, m=k, m>k, or m<k.

In specific application, when the target power conversion unit operates in the MPPT mode, the corresponding maximum power $P_{mpp}$ may be greater than the original reference power $P_{res}$. Because the updated reference power $P_{res}'$ is less than or equal to the maximum power $P_{mpp}$, the following relationship exists between the updated reference power $P_{res}'$ and the original reference power $P_{res}$: $P_{res}' > P_{res}$, or $P_{res}' < P_{res}$, or $P_{res}' = P_{res}$.

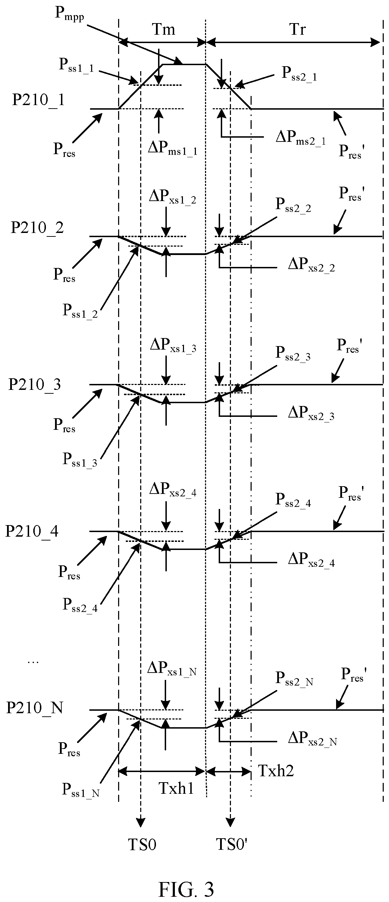

FIG. 3 is a diagram of the operating power of the power conversion unit according to an embodiment of this application. Refer to FIG. 3. For example, the power conversion unit 210_1 is used as the target power conversion unit, and 210_2 to 210_N are used as the coordinated power conversion units. P210_1 represents an operating power of the power conversion unit 210_1, P210_2 represents an operating power of the power conversion unit 210_2, ..., and P210_N represents an operating power of the power conversion unit 210_N. Specifically, before an operating mode of the target power conversion unit 210_1 is switched to the MPPT mode (that is, before a phase Tm), the target power conversion unit 210_1 runs in the PR mode. In this case, the operating power of the target power conversion unit 210_1 is the original reference power $P_{res}$ before update.

Then, the mode switching process (namely, a phase Txh1 and a phase Txh2) is performed. In the phase Tm (namely, the phase Txh1), the control unit 230 controls the operating mode of the target power conversion unit 210_1 to be switched from the PR mode to the MPPT mode, obtains, in the MPPT mode, the maximum power $P_{mpp}$ that can be output by the photovoltaic module 100, and obtains the updated reference power $P_{res}'$ based on the maximum power $P_{mpp}$. In addition, in the phase Tm (namely, the phase Txh1), the operating powers of the coordinated power conversion units 210_2 to 210_N are controlled to be coordinately adjusted. Then, in the phase Txh2 in a phase Tr, the control unit 230 controls the operating mode of the target power conversion unit 210_1 to be switched from the MPPT mode to the PR mode, for the operating power of the target power conversion unit 210_1 to be changed from the maximum power $P_{mpp}$ to the updated reference power $P_{res}'$. In addition, in the phase Txh2, the control unit 230 controls the coordinated power conversion units 210_2 to 210_N to coordinately adjust the operating powers. Based on this, the target power conversion unit 210_1 has a power change in the mode switching process (namely, the phase Txh1 and the phase Txh2) of the target power conversion unit 210_1. For example, any moment TSO in the phase Txh1 and the phase Txh2 is used as an example. In the phase Txh1, an operating power variation of the target power conversion unit 210_1 at the moment TSO is a target power variation $\Delta P_{ms1\_1}$, and the target power variation $\Delta P_{ms1\_1}$ may be a variation between an instantaneous operating power $P_{ss1\_1}$ of the target power conversion unit 210_1 at the moment TSO and the reference power $P_{res}$ before update. In the phase Txh2, an operating power variation of the target power conversion unit 210_1 at the moment TSO' is a target power variation $\Delta P_{ms2\_1}$, and the target power variation $\Delta P_{ms2\_1}$ may be a variation between an instantaneous operating power $P_{ss2\_1}$ of the target power conversion unit 210_1 at the moment TSO' and the updated reference power $P_{res}'$. Certainly, the target power variation $\Delta P_{ms2\_1}$ may alternatively be a variation between an instantaneous operating power $P_{ss2\_1}$ of the target power conversion unit 210_1 at the moment TSO' and the reference power $P_{res}$ before update. This is not limited herein.

In addition, for example, the coordinated power conversion units 210_2 to 210_N operate in the PR mode in both the phase Tm and the phase Tr. The coordinated power conversion unit 210_2 is used as an example. Before the operating mode of the target power conversion unit 210_1 is switched to the MPPT mode, the operating power of the coordinated power conversion unit 210_2 is the original reference power $P_{res}$ before update, and a power change occurs in the coordinated adjustment process (namely, the phase Txh1 and the phase Txh2) of the coordinated power conversion unit 210_2. Specifically, an operating power variation of the coordinated power conversion unit 210_2 at the moment TSO is a coordinated power variation $\Delta P_{xs1\_2}$, and the coordinated power variation $\Delta P_{xs1\_2}$ is a variation between an instantaneous operating power $P_{ss1\_2}$ of the coordinated power conversion unit 210_2 at the moment TSO and a specified power (for example, the original reference power $P_{res}$). An operating power variation of the coordinated power conversion unit 210_2 at the moment TSO' is a coordinated power variation $\Delta P_{xs2\_2}$, and the coordinated power variation $\Delta P_{xs2\_2}$ is a variation between an instantaneous operating power $P_{ss2\_2}$ of the coordinated power conversion unit 210_2 at the moment TSO' and the specified power (for example, the updated reference power $P_{res}$'). Certainly, the coordinated power variation $\Delta P_{xs2\_2}$ may alternatively be a variation between an instantaneous operating power $P_{ss2\_2}$ of the coordinated power conversion unit 210_2 at the moment TSO' and the specified power (for example, the original reference power $P_{res}$). Similarly, coordinated power variations $\Delta P_{xs1\_3}$ to $\Delta P_{xs1\_N}$ and $\Delta P_{xs2\_3}$ to $\Delta P_{xs2\_N}$ may be deduced by analogy. Details are not described herein again.

In addition, refer to FIG. 3. The target power variation $\Delta P_{ms\_1}$ of the target power conversion unit 210_1 in the mode switching process is relatively increased. In this case, the target power variation $\Delta P_{ms\_1}$ is a positive value, that is, a sign of the target power variation $\Delta P_{ms\_1}$ is positive. Therefore, a sum $\Delta P_{msm}$ (in this case, $\Delta P_{msm}=\Delta P_{ms\_1}$) of the target power variations is also a positive value, and a sign of the sum $\Delta P_{msm}$ is also positive. To reduce fluctuation of the total output power and the output voltage of the power conversion unit, the coordinated power variations $\Delta P_{xs\_2}$ to $\Delta P_{xs\_N}$ are used to offset the target power variation $\Delta P_{ms\_1}$. In this case, the coordinated power conversion units need to be controlled to coordinately decrease corresponding powers based on the reference power (for example, the original reference power $P_{res}$ before update), so that the coordinated power variations $\Delta P_{xs\_2}$ to $\Delta P_{xs\_N}$ are negative values, that is, signs of $\Delta P_{xs\_2}$ to $\Delta P_{xs\_N}$ are negative. Therefore, a sum of the coordinated power variations $\Delta P_{xs\_2}$ to $\Delta P_{xs\_N}$ is also negative, and a sign of the sum is also negative.

It may be understood that the sum of the target power variations is a sum of target power variations that occur in all the target power conversion units at a same moment. In addition, the sum of the coordinated power variations is a sum of coordinated power variations that occur in all the coordinated power conversion units at a same moment. It may be understood that, in an actual running process of the power conversion system, there is a factor like a control error. Therefore, when a difference between a moment at which the target power variation occurs and a moment at which the coordinated power variation occurs is within a specific time threshold, it may be considered as the two moments are a same moment. For example, the time threshold may be a value, for example, 1 ns. Connotations of the same moment in the following embodiments are consistent. Details are not described one by one.

Based on this, a sign of the sum of the coordinated power variations may be opposite to a sign of the sum of the target power variations. In addition, a difference between an absolute value of the sum of the coordinated power variations and an absolute value of the sum of the target power variations is less than the variation threshold, so that the total variation of the operating powers of the N power conversion units can be reduced as much as possible or even ignored. In this way, fluctuation of the output power and the output voltage of the power conversion unit is reduced, and stability and control precision of the power supply system are improved.

It may be understood that the difference between the absolute value of the sum of the coordinated power variations and the absolute value of the sum of the target power variations may be a difference or a ratio between the absolute value of the sum of the coordinated power variations and the absolute value of the sum of the target power variations.

In this application, because the sum of the coordinated power variations is related to the sum of the target power variations, each coordinated power variation may be determined based on the sum of the target power variations. For example, the coordinated power variation corresponding to the $y^{th}$ coordinated power conversion unit in the m coordinated power conversion units is: $-\alpha_y*\Delta P_{msm}$, where $\Delta P_{msm}$ represents the sum of the target power variations, y is an integer, and $y\in[1, m]$. In addition, $\alpha_y$ represents the allocation weight corresponding to the $y^{th}$ coordinated power conversion unit, and $\alpha_y\in[0, 1]$. In this way, the sign of the sum of the coordinated power variations corresponding to the coordinated power conversion units is opposite to the sign of the sum of the target power variations, and $\Delta P_{msm}$ can be allocated to different coordinated power conversion units based on the allocation weight $\alpha_y$.

For example, refer to FIG. 3. The moment TSO is used as an example. $\Delta P_{msm}=\Delta P_{ms\_1}$. The coordinated power conversion unit 210_2 is used as a first coordinated power conversion unit, and the coordinated power conversion unit 210_2 corresponds to an allocation weight $\alpha_1$. In this case, the coordinated power variation $\Delta P_{xs\_2}$ corresponding to the coordinated power conversion unit 210_2 is $-\alpha_1*\Delta P_{msm}$, that is, $\Delta P_{xs\_2}=-\alpha_1*\Delta P_{ms\_1}$. The coordinated power conversion unit 210_3 is used as a second coordinated power conversion unit, and the coordinated power conversion unit 210_3 corresponds to an allocation weight ($\alpha_2$. In this case, the coordinated power variation $\Delta P_{xs\_3}$ corresponding to the coordinated power conversion unit 210_3 is: $-\alpha_2*\Delta P_{msm}$, that is, $\Delta P_{xs\_3}=-\alpha_2*\Delta P_{ms\_1}$. The coordinated power conversion unit 210_4 is used as a third coordinated power conversion unit, and the coordinated power conversion unit 210_4 corresponds to an allocation weight $\alpha_3$. In this case, the coordinated power variation $\Delta P_{xs\_4}$ corresponding to the coordinated power conversion unit 210_4 is: $-\alpha_3*\Delta P_{msm}$, that is, $\Delta P_{xs\_4}=-$

$\alpha_3*\Delta P_{ms\_1}$. By analogy, the coordinated power conversion unit 210_N is used as an $m^{th}$ coordinated power conversion unit, and the coordinated power conversion unit 210_N corresponds to an allocation weight $\alpha_m$. In this case, the coordinated power variation $\Delta P_{xs\_N}$ corresponding to the coordinated power conversion unit 210_N is $-\alpha_m*\Delta P_{msm}$, that is, $\Delta P_{xs\_N}=-\alpha_m*\Delta P_{ms\_1}$.

It may be understood that each allocation weight $\alpha_y$ may be configured in an offline manner or an online manner. In addition, a sum of allocation weights corresponding to the m coordinated power conversion units may be 1, that is,

$$\sum_{1}^{m} \alpha_y = 1$$

. It may be understood that, the sum 1 of the allocation weights corresponding to the m coordinated power conversion units is a theoretical value. In specific application, when a test device outputs a power, there may be an error between the sum of the coordinated power variations and the sum of the target power variations. Therefore, the sum of the allocation weights corresponding to the m coordinated power conversion units may be not 1, provided that the sum meets an error allowance case.

Still refer to FIG. 3. Each coordinated power variation and each target power variation may occur in a same phase. To be specific, an occurrence moment of each coordinated power variation is the same as an occurrence moment of each target power variation, and an end moment of each coordinated power variation is the same as an end moment of each target power variation. For example, the coordinated power variations $\Delta P_{xs\_2}$ to $\Delta P_{xs\_N}$ and the target power variation $\Delta P_{ms\_1}$ occur at the same moment TS0. In this way, timeliness of coordinated control can be improved, so that when the target power variation occurs in the target power conversion unit, the coordinated power conversion unit can be controlled in time to coordinately adjust the occurring coordinated power variation, to offset the target power variation by using the coordinated power variation, so as to reduce fluctuation of the output power and the output voltage of the power conversion unit.

In this application, the updated reference power $P_{res}'$ may be obtained in a plurality of update manners. The following describes the update manners of obtaining the updated reference power $P_{res}'$ by using an example.

Update manner 1: In a control periodicity, if the control unit 230 selects one power conversion unit (for example, 210_1) from the N power conversion units as the target power conversion unit, after an operating mode of the power conversion unit 210_1 is switched to the MPPT mode, a maximum power $P_{mpp\_1}$ output by the photovoltaic module 100 can be obtained in the MPPT mode, so that the maximum power $P_{mpp\_1}$ can be used as a target maximum power $P_{a1}$, that is, $P_{a1}=P_{mpp\_1}$. Based on this, the updated reference power $P_{res}'$ is equal to the target maximum power $P_{a1}$ minus a reserved power $\Delta P$, that is, $P_{res}'=P_{a1}-\Delta P$. A constant power threshold may be set as the reserved power $\Delta P$ based on experimental data or experience. Alternatively, a power threshold that can be updated accordingly may be obtained based on the maximum power $P_{mpp\_1}$ and used as the reserved power $\Delta P$. For example, before the operating mode of the power conversion unit 210_1 is switched to the MPPT mode, the operating mode of the power conversion unit 210_1 is still the PR mode. In this case, the power conversion unit 210_1 corresponds to a reserved power $\Delta P'$. After the control unit 230 controls the operating mode of the power conversion unit 210_1 to be switched to the MPPT mode, the maximum power $P_{mpp\_1}$ obtained by the power conversion unit 210_1 in the MPPT mode can be controlled, so that the reserved power $\Delta P'$ can be updated based on the maximum power $P_{mpp\_1}$, to obtain an updated reserved power $\Delta P''$. In this way, $P_{res}'=P_{a1}-\Delta P''$. For example, the maximum power $P_{mpp\_1}$ is multiplied by a percentage Cc to be used as the reserved power $\Delta P''$, that is, $\Delta P''=P_{mpp\_1}*C_C$, where $0\%\leq C_C\leq100\%$, and $70\%\leq C_C\leq100\%$, for example, $80\%\leq C_C\leq100\%$, for example, $85\%\leq C_C\leq95\%$. In a specific application, Cc may be set to 70%, 75%, 80%, 85%, 90%, 95%, or the like. This is not limited herein.

Update manner 2: In a control periodicity, if the control unit 230 selects a plurality of power conversion units from the N power conversion units as the target power conversion units, for example, selects two power conversion units 210_1 and 210_2 as the target power conversion units, after an operating mode of the power conversion unit 210_1 is switched to the MPPT mode, a maximum power $P_{mpp\_1}$ output by the photovoltaic module can be obtained in the MPPT mode, and after an operating mode of the power conversion unit 210_2 is switched to the MPPT mode, a maximum power $P_{mpp\_2}$ output by the photovoltaic module can be obtained in the MPPT mode, so that an average value (for example, an arithmetic average value or a weighted average value) of the maximum powers $P_{mpp\_1}$ and $P_{mpp\_2}$ can be used as a target maximum power $P_{b1}$. That is, $P_{b1}$ is equal to the average value (for example, the arithmetic average value or the weighted average value) of $P_{mpp\_1}$ and $P_{mpp\_2}$. Based on this, the updated reference power $P_{res}'$ is equal to the target maximum power $P_{b1}$ minus a reserved power $\Delta P$, that is, $P_{res}'=P_{b1}-\Delta P$. A constant power threshold may be set as the reserved power $\Delta P$ based on experimental data or experience. Alternatively, a power threshold that can be updated accordingly may be obtained based on the maximum power $P_{mpp\_1}$ or $P_{mpp\_2}$ as the reserved power $\Delta P$. For example, the maximum power $P_{mpp\_1}$ is used as an example. A reserved power $\Delta P'$ may be updated based on the maximum power $P_{mpp\_1}$, to obtain an updated reserved power $\Delta P''$ (for example, the maximum power $P_{mpp\_1}$ or $P_{mpp\_2}$ is multiplied by a percentage to be used as the reserved power $\Delta P''$), so that $P_{res}'=P_{b1}-\Delta P''$. For example, the maximum power $P_{mpp\_1}$ or $P_{mpp\_2}$ is multiplied by a percentage $C_C$ to be used as the reserved power $\Delta P''$, that is, $\Delta P''=P_{mpp\_1}*C_C$ or $\Delta P''=P_{mpp\_2}*C_C$. Alternatively, a power threshold that can be updated accordingly may be obtained based on the target maximum power $P_{b1}$ and used as the reserved power $\Delta P$, and the reserved power $\Delta P'$ may be updated based on the target maximum power $P_{b1}$, to obtain an updated reserved power $\Delta P''$, where $P_{res}'=P_{b1}-\Delta P''$. For example, the target maximum power $P_{b1}$ is multiplied by the percentage and used as the reserved power $\Delta P''$, that is, $\Delta P''=P_{b1}*C_C$.

Update manner 3: In a control periodicity, if the control unit 230 selects one power conversion unit (for example, 210_1) from the N power conversion units as the target power conversion unit, after an operating mode of the power conversion unit 210_1 is switched to the MPPT mode, a maximum power $P_{mpp\_}1$ output by the photovoltaic module can be obtained in the MPPT mode, so that the maximum power $P_{mpp\_}1$ is used as a target maximum power $P_{a2}$, that is, $P_{a2}=P_{mPP\_}1$. Based on this, the updated reference power $P_{res}'$ may be equal to a target maximum power $P_{a2}$ multiplied by a reference percentage $C_A$, that is, $P_{res}'=P_{a2}*C_A$, where $70\%\leq C_A<100\%$, for example, $80\%\leq C_A<100\%$, for example, $85\%\leq C_A\leq95\%$. In a specific application, $C_A$ may be set to 70%, 75%, 80%, 85%, 90%, 95%, or the like. This is not limited herein.

Update manner 4: In a control periodicity, if the control unit 230 selects a plurality of power conversion units from the N power conversion units as the target power conversion units, for example, selects two power conversion units 210_1 and 210_2 as the target power conversion units, after an operating mode of the power conversion unit 210_1 is switched to the MPPT mode, a maximum power $P_{mpp\_}1$ output by the photovoltaic module can be obtained in the MPPT mode, and after an operating mode of the power conversion unit 210_2 is switched to the MPPT mode, a maximum power $P_{mpp\_}2$ output by the photovoltaic module can be obtained in the MPPT mode, so that an average value (for example, an arithmetic average value or a weighted average value) of the maximum powers $P_{mpp\_}1$ and $P_{mpp\_}2$ can be used as a target maximum power $P_{b2}$. That is, $P_{b2}$ is equal to the average value (for example, the arithmetic average value or the weighted average value) of $P_{mpp\_}1$ and $P_{mpp\_}2$. Based on this, the updated reference power $P_{res}'$ is equal to a target maximum power $P_{b2}$ multiplied by a reference percentage $C_B$, that is, $P_{res}'=P_{a2}*C_B$, where $70\%\leq C_B<100\%$, for example, $80\%\leq C_B<100\%$, for example, $85\%\leq C_B\leq95\%$. In a specific application, $C_B$ may be set to 70%, 75%, 80%, 85%, 90%, 95%, or the like. This is not limited herein.

It may be understood that, in each of a plurality of consecutive control periodicities, any update manner in Update manner 1 to Update manner 4 may be used to obtain the updated reference power. Alternatively, in a plurality of consecutive control periodicities, two, three, or four update manners in Update manner 1 to Update manner 4 may be mutually combined to obtain the updated reference power.

It may be understood that an updated reference power in a $k^{th}$ control periodicity may be the same as a reference power in a $(k-1)^{th}$ control periodicity. Alternatively, an updated reference power in a $k^{th}$ control periodicity may be greater than a reference power in a $(k-1)^{th}$ control periodicity. Alternatively, an updated reference power in a $k^{th}$ control periodicity may be less than a reference power in a $(k-1)^{th}$ control periodicity. k is an integer greater than 0.

It may be understood that the updated reserved power in the $k^{th}$ control periodicity may be the same as the reserved power in the $(k-1)^{th}$ control periodicity. Alternatively, the updated reserved power in the $k^{th}$ control periodicity may be greater than the reserved power in the $(k-1)^{th}$ control periodicity. Alternatively, the updated reserved power in the $k^{th}$ control periodicity may be less than the reserved power in the $(k-1)^{th}$ control periodicity.

In some examples, the target power conversion unit and the coordinated power conversion unit may be randomly selected from the N power conversion units. Specifically, in one or more control periodicities in a plurality of consecutive control periodicities, one or more power conversion units are randomly selected from the N power conversion units as the target power conversion units, and one or more power conversion units are randomly selected from the N power conversion units as the coordinated power conversion units. In this way, the target power conversion unit and/or the coordinated power conversion unit can be selected in a random selection manner. With reference to a specific embodiment of the random selection manner, the following describes in detail an operating process of randomly selecting the target power conversion unit in embodiments of this application.

In this application, a probability of selecting at least a part of the power conversion units as the target power conversion unit may be different. For example, probabilities of selecting all the power conversion units as the target power conversion units may be different, or a probability of selecting a part of the power conversion units as the target power conversion unit may be different, and a probability of selecting the rest of the power conversion units as the target power conversion unit is the same. In addition, a probability of selecting at least a part of the power conversion units as the coordinated power conversion unit may be different. For example, probabilities of selecting all the power conversion units as the coordinated power conversion units may be different, or a probability of selecting a part of the power conversion units as the coordinated power conversion unit may be different, and a probability of selecting the rest of the power conversion units as the coordinated power conversion unit is the same.

Random selection manner 1:

When the target power conversion unit is randomly selected, a probability $\chi A$ that each power conversion unit is selected as the target power conversion unit is the same. In addition, when the coordinated power conversion unit is randomly selected, a probability $\chi B$ that each power conversion unit is selected as the coordinated power conversion unit is the same. In this way, the power conversion unit may be randomly selected as the target power conversion unit at an equal probability, and the power conversion unit may be randomly selected as the coordinated power conversion unit at an equal probability. Further, in each control periodicity, the power conversion unit is randomly selected as the target power conversion unit at the equal probability, and the power conversion unit is randomly selected as the coordinated power conversion unit at the equal probability.

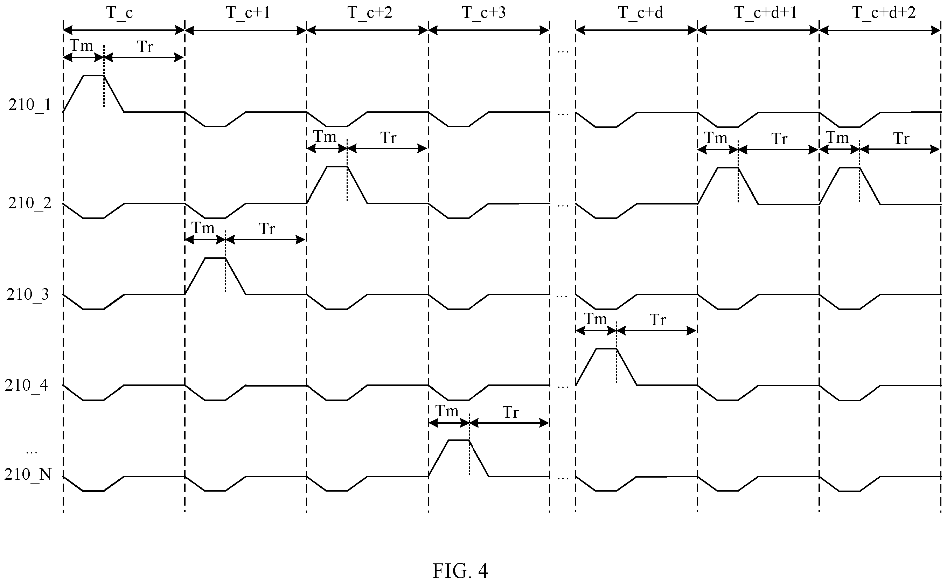

The following provides detailed descriptions, with reference to FIG. 4, by using consecutive control periodicities T_c to T_c+d+2 as examples and by using an example in which the power conversion unit is selected from each control periodicity as the target power conversion unit. FIG. 4 is a diagram of the operating mode of the power conversion unit in the control periodicity according to an embodiment of this application. Refer to FIG. 4. In the c$^{th}$ control periodicity T_c, the control unit 230 randomly selects the power conversion unit 210_1 from the power conversion units 210_1 to 210_N as the target power conversion unit based on the same probability $\chi A$, and randomly selects the power conversion units 210_2 to 210_N from the power conversion units 210_1 to 210_N as the coordinated power conversion units based on the same probability $\chi B$. In addition, for operating processes of the target power conversion unit 210_1 and the coordinated power conversion units 210_2 to 210_N, refer to the foregoing described operating processes. Details are not described herein again. Similarly, in the (c+1)$^{th}$ control periodicity T_c+1, the control unit 230 selects the power conversion unit 210_3 as the target power conversion unit, and selects the power conversion units 210_1, 210_2, and 210_4 to 210_N as the coordinated power conversion units. In the (c+2)$^{th}$ control periodicity T_c+2, the control unit 230 selects the power conversion unit 210_2 as the target power conversion unit, and selects the power conversion units 210_1 and 210_3 to 210_N as the coordinated power conversion units. In the (c+3)' control periodicity T_c+3, the control unit 230 selects the power conversion unit 210_N as the target power conversion unit, and selects the power conversion units 210_1 to 210_N-1 as the coordinated power conversion units. In the (c+d)$^{th}$ control periodicity T_c+d, the control unit 230 selects the power conversion unit 210_4 as the target power conversion unit, and selects the power conversion units 210_1 to 210_3 and 210_5 to 210_N as the coordinated power conversion units. In the (c+d+1)$^{th}$ control periodicity T_c+d+1, the control unit 230 selects the power conversion unit 210_2 as the target power conversion unit, and selects the power conversion units 210_1 and 210_3 to 210_N as the coordinated power conversion units. In the (c+d+2)$^{th}$ control periodicity T_c+d+2, the control unit 230 selects the power conversion unit 210_2 as the target power conversion unit, and selects the power conversion units 210_1 and 210_3 to 210_N as the coordinated power conversion units. In addition, for other operating processes in the (c+1)$^{th}$ control periodicity to the (c+d+2)$^{th}$ control periodicity T_c+1 to T_c+d+2, refer to the operating process in the c$^{th}$ control periodicity T_c. Details are not described herein again.

It may be understood that $\chi A \in [0,1]$, where a sum of the probabilities $\chi A$ corresponding to the power conversion units 210_1 to 210_N may be 1, or a sum of the probabilities $\chi A$ corresponding to the power conversion units 210_1 to 210_N may be greater than or less than 1. In specific implementation, selection probabilities $\chi AA$ corresponding to the power conversion units 210_1 to 210_N may be stored in a storage unit of the power supply system. The control unit 230 can obtain the selection probability $\chi AA$ corresponding to each of the power conversion units 210_1 to 210_N from the storage unit, and randomly select a corresponding power conversion unit as the target power conversion unit. The selection probability $\chi AA$ corresponding to each of the power conversion units 210_1 to 210_N may be set to a fixed value in an offline manner or an online manner. For example, if an operator needs to set the selection probability $\chi AA$ in the online manner, an operator may input, through a user interface (User Interface, UI), a probability adjustment instruction for a selection probability or selection probabilities corresponding to a part or all of the power conversion units. When receiving the probability adjustment instruction, the control unit 230 can adjust the selection probability or selection probabilities of the part or all of the power conversion units based on the probability adjustment instruction. For example, if the target power conversion unit is randomly selected from all the power conversion units 210_1 to 210_N at the equal probability, the selection probabilities $\chi AA$ corresponding to the power conversion units 210_1 to 210_N may be set to a same value $\chi AA\_1$ based on the probability adjustment instruction. For example, if the target power conversion unit is randomly selected from partial power conversion units 210_2 to 210_N at the equal probability, the selection probabilities $\chi AA$ corresponding to the power conversion units 210_2 to 210_N may be set to a same value $\chi AA\_2$ based on the probability adjustment instruction. For example, if the target power conversion unit is randomly selected from partial power conversion units 210_3 to 210_N at the equal probability, the selection probabilities $\chi AA$ corresponding to the power conversion units 210_3 to 210_N may be set to a same value $\chi AA\_3$ based on the probability adjustment instruction.

Similarly, $\chi B \in [0,1]$, where a sum of the probabilities $\chi B$ corresponding to the power conversion units 210_1 to 210_N may be 1, or a sum of the probabilities $\chi B$ corresponding to the power conversion units 210_1 to 210_N may be greater than or less than 1. In specific implementation, for an implementation of the probability $\chi B$, refer to the implementation of the probability $\chi A$. Details are not described herein again.

It may be understood that each control periodicity includes the phase Tm in the MPPT mode and the phase Tr in the PR mode, that is, the phase Tm in the MPPT mode and the phase Tr in the PR mode form a control periodicity. In addition, periodicity duration of the control periodicities may be the same or may be different. In addition, the periodicity duration of the control periodicity may be a fixed constant, or may not be a fixed constant, that is, the periodicity duration is not fixed. In actual application, the periodicity duration may be adjusted and changed in real time based on duration of the phase Tm in the MPPT mode and duration of the phase Tr in the PR mode. The control periodicity in the following embodiments may be set in a similar way. Details are not described below one by one.

Random selection manner 2:

When the target power conversion unit is randomly selected, probabilities of selecting at least a part of the power conversion units as the target power conversion unit is different. In this way, the power conversion unit can be randomly selected as the target power conversion unit at a different probability. For example, probabilities of selecting all the power conversion units as the target power conversion units may be different. For example, a probability of selecting the power conversion unit 210_1 as the target power conversion unit is $\chi 0A\_1$, a probability of selecting the power conversion unit 210_2 as the target power conversion unit is $\chi 0A\_2$, ..., and a probability of selecting the power conversion unit 210_N as the target power conversion unit is $\chi 0A\_N$, and every two of $\chi 0A\_1$ to $\chi 0A\_N$ are different. Alternatively, a probability of selecting a part of the power conversion units as the target power conversion unit may be different, and a probability of selecting the rest of the power conversion units as the target power conversion unit is the same. For example, a probability of selecting the power conversion unit 210_1 as the target power conversion unit is $\chi 0A\_1$, a probability of selecting the power conversion unit 210_2 as the target power conversion unit is $\chi 0A\_2$, a probability of selecting the power conversion unit 210_3 as the target power conversion unit is $\chi 0A\_3$, ..., and a probability of selecting the power conversion unit 210_N as the target power conversion unit is $\chi 0A\_N$. $\chi 0A\_1=\chi 0A\_2$, and every two of $\chi 0A\_3$ to $\chi 0A\_N$ are different. For example, in each control periodicity, the power conversion unit is randomly selected as the target power conversion unit at a different probability.

In addition, when the coordinated power conversion unit is randomly selected, a probability of selecting at least a part of the power conversion units the coordinated power conversion unit is different. In this way, the power conversion unit can be randomly selected as the coordinated power conversion unit at a different probability. For example, probabilities of selecting all the power conversion units as the coordinated power conversion units may be different. For example, a probability of selecting the power conversion unit 210_1 as the coordinated power conversion unit is $\chi 0B\_1$, a probability of selecting the power conversion unit 210_2 as the coordinated power conversion unit is $\chi 0B\_2$, ..., and a probability of selecting the power conversion unit 210_N as the coordinated power conversion unit is $\chi 0B\_N$, and every two of $\chi 0B\_1$ to $\chi 0B\_N$ are different. Alternatively, a probability of selecting a part of the power conversion units as the coordinated power conversion unit may be different, and a probability of selecting the rest of the power conversion units as the coordinated power conversion unit is the same. For example, a probability of selecting the power conversion unit 210_1 as the coordinated power conversion unit is $\chi 0B\_1$, a probability of selecting the power conversion unit 210_2 as the coordinated power conversion unit is $\chi 0B\_2$, a probability of selecting the power conversion unit 210_3 as the coordinated power conversion unit is $\chi 0B\_3$, ..., and a probability of selecting the power conversion unit 210_N as the coordinated power conversion unit is $\chi 0B\_N$. $\chi 0B\_1=\chi 0B\_2$, and every two of $\chi 0B\_N$ to $\chi 0B\_N$ are different. For example, in each control periodicity, the power conversion unit is randomly selected as the coordinated power conversion unit at a different probability.

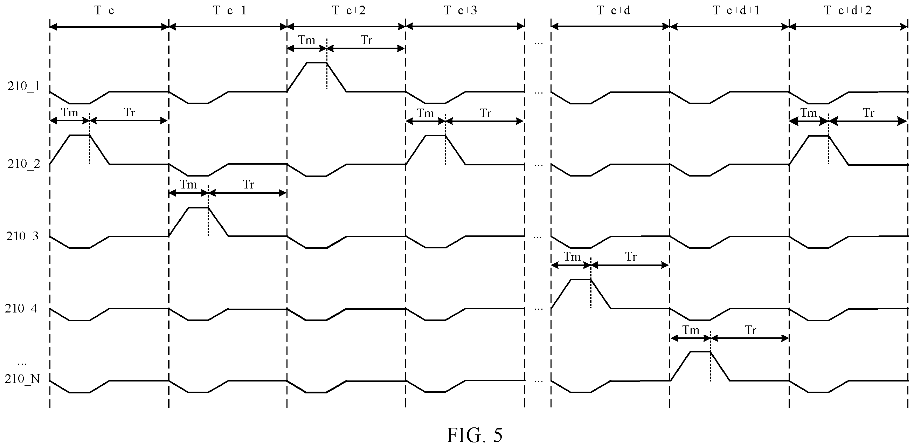

The following provides detailed descriptions, with reference to FIG. 5, by using consecutive control periodicities T_c to T_c+d+2 as examples and by using an example in which the power conversion unit is selected from each control periodicity as the target power conversion unit. FIG. 5 is another diagram of the operating mode of the power conversion unit in the control periodicity according to an embodiment of this application. Refer to FIG. 5. In the c$^{th}$ control periodicity T_c, the control unit 230 randomly selects the power conversion unit 210_1 from the power conversion units 210_1 to 210_N as the target power conversion unit based on specified selection probabilities $\chi 0AA\_1$ to $\chi 0AA\_N$. In addition, the control unit 230 randomly selects the power conversion units 210_2 to 210_N from the power conversion units 210_1 to 210_N as the coordinated power conversion units based on specified selection probabilities $\chi 0BA\_1$ to $\chi 0BA\_N$. In addition, for operating processes of the target power conversion unit 210_1 and the coordinated power conversion units 210_1 to 210_N, refer to the foregoing described operating processes. Details are not described herein again.

Similarly, in the (c+1)$^{th}$ control periodicity T_c+1, the control unit 230 selects the power conversion unit 210_1 as the target power conversion unit, and selects the power conversion units 210_2 to 210_N as the coordinated power conversion units. In the (c+2)$^{th}$ control periodicity T_c+2, the control unit 230 selects the power conversion unit 210_2 as the target power conversion unit, and selects the power conversion units 210_1 and 210_3 to 210_N as the coordinated power conversion units. In the (c+3)$^{th}$ control periodicity T_c+3, the control unit 230 selects the power conversion unit 210_3 as the target power conversion unit, and selects the power conversion units 210_1, 210_2, and 210_4 to 210_N N-1 as the coordinated power conversion units. In the $(c+d)^{th}$ control periodicity T_c+d, the control unit 230 selects the power conversion unit 210_4 as the target power conversion unit, and selects the power conversion units 210_1 to 210_3 and 210_5 to 210_N as the coordinated power conversion units. In the $(c+d+1)^{th}$ control periodicity T_c+d+1, the control unit 230 selects the power conversion unit 210_2 as the target power conversion unit, and selects the power conversion units 210_1 and 210_3 to 210_N as the coordinated power conversion units. In the $(c+d+2)^{th}$ control periodicity T_c+d+2, the control unit 230 selects the power conversion unit 210_2 as the target power conversion unit, and selects the power conversion units 210_1 and 210_3 to 210_N as the coordinated power conversion units. In addition, for other operating processes in the $(c+1)^{th}$ control periodicity to the $(c+d+2)^{th}$ control periodicity T_c+1 to T_c+d+2, refer to the operating process in the $c^{th}$ control periodicity T_c. Details are not described herein again.

It may be understood that any one of $\chi 0A\_1$ to $\chi 0A\_N$ is in [0,1], where a sum of the probabilities $\chi 0A\_3$ to $\chi 0A\_3$ may be 1, or a sum of the probabilities $\chi 0A\_1$ to $\chi 0A\_N$ may be greater than or less than 1. In addition, in specific application, a storage unit of the power supply system also stores the probabilities $\chi 0A\_1$ to $\chi 0A\_3$ corresponding to the power conversion units 210_1 to 210_N. The control unit 230 can obtain the selection probabilities $\chi 0AA\_1$ to $\chi 0AA\_N$ of the power conversion units from the storage unit, to randomly select a corresponding power conversion unit from the power conversion units 210_1 to 210_N as the target power conversion unit. Any one of the selection probabilities $\chi 0AA\_1$ to $\chi 0AA\_N$ corresponding to the power conversion units 210_1 to 210_N may also be set to any fixed value in the offline manner or the online manner. For example, if the operator needs to set one or more of the selection probabilities $\chi 0AA\_1$ to $\chi 0AA\_N$ in the online manner, an operator may input a probability adjustment instruction through a user interface (User Interface, UI). When receiving the probability adjustment instruction, the control unit 230 can adjust the selection probability or selection probabilities of the part or all of the power conversion units based on the probability adjustment instruction. For example, if the selection probability $\chi 0AA\_1$ needs to be adjusted, the operator inputs a probability adjustment instruction to the control unit 230 through the user interface, to change $\chi 0AA\_1$ to $\chi 0AA\_1'$. Alternatively, for example, if the selection probabilities $\chi 0AA\_1$ to $\chi 0AA\_3$ need to be adjusted, the operator inputs a probability adjustment instruction to the control unit 230 through the user interface, to change $\chi 0AA\_1$ to $\chi 0AA\_1'$, change $\chi 0AA\_3$ to $\chi 0AA\_2'$, and change $\chi 0AA\_3$ to $\chi 0AA\_3'$

Similarly, any one of $\chi 0B\_1$ to $\chi 0B\_N$ is in [0,1], where a sum of the probabilities $\chi 0B\_1$ to $\chi 0B\_N$ may be 1, or a sum of the probabilities $\chi 0B\_1$ to $\chi 0B\_N$ may be greater than or less than 1. In specific application, for an implementation of the probabilities $\chi 0B\_1$ to $\chi 0B\_N$,

refer to the implementation of the probabilities $\chi 0A\_1$ to $\chi 0A\_N$. Details are not described herein again.

Random selection manner 3:

When the target power conversion unit and the coordinated power conversion unit are randomly selected, a probability $\chi A$ that each power conversion unit is selected as the target power conversion unit may be the same, and a probability of selecting at least a part of the power conversion units as the coordinated power conversion unit may be different. For a specific operating process of this embodiment, refer to the foregoing random selection manner 1 and random selection manner 2. Details are not described herein again.

Random selection manner 4:

When the target power conversion unit and the coordinated power conversion unit are randomly selected, a probability of selecting at least a part of the power conversion units as the target power conversion unit may be different. In addition, a probability of selecting each power conversion unit as the coordinated power conversion unit is the same. For a specific operating process of this embodiment, still refer to the foregoing random selection manner 1 and random selection manner 2. Details are not described herein again.

It may be understood that when the target power conversion unit is randomly selected, the coordinated power conversion unit may not be randomly selected, but all the power conversion units other than the target power conversion unit are directly used as the coordinated power conversion units. This is not limited herein.

In still some examples, the target power conversion unit and/or the coordinated power conversion unit may alternatively be selected in a fixed sequence. Specifically, in one or more control periodicities in a plurality of consecutive control periodicities, the target power conversion unit is one or more power conversion units selected from the N power conversion units in the fixed sequence, and/or the coordinated power conversion unit is one or more power conversion units selected from the N power conversion units in the fixed sequence. In this way, the target power conversion unit and/or the coordinated power conversion unit can be selected in a specific selection sequence. With reference to specific embodiments of a fixed-sequence selection manner, the following describes in detail an operating process of selecting the target power conversion unit in the fixed sequence in embodiments of this application.

Fixed-sequence selection manner 1:

In each control periodicity, one unit group is cyclically selected as the target power conversion unit according to a unidirectional fixed time sequence (for example, a positive sequence). Based on this, every M control periodicities form one cycle periodicity. Therefore, a plurality of consecutive cycle periodicities can occur, and the plurality of cycle periodicities have a first cycle periodicity. Specifically, the power conversion units 210_1 to 210_N are grouped into a first unit group Z_1 to an $M^{th}$ unit group Z_M that are disposed in sequence. Any unit group in the unit groups Z_1 to Z_M includes one or more power conversion units, and M is an integer and M≥2. Power conversion units in different unit groups are different. For example, when each unit group in the unit groups Z_1 to Z_M may include one power conversion unit, M=N. For example, the unit group Z_1 includes the power conversion unit 210_1, the unit group Z_2 includes the power conversion unit 210_2, ..., and the unit group Z_N includes the power conversion unit 210_N. Alternatively, each unit group in the unit groups Z_1 to Z_M includes a plurality of power conversion units. For example, when each unit group in the unit groups Z_1 to Z_M includes two power conversion units, M=N/2. The unit group Z_1 includes the power conversion units 210_1 and 210_2, the unit group Z_2 includes the power conversion units 210_3 and 210_4, ..., and the unit group Z_M includes the power conversion units 210_N-1 and 210_N. Alternatively, a part of the unit groups each may include one power conversion unit, and the rest of the unit groups each may include a plurality of power conversion units. It may be understood that power conversion units in different units may alternatively be partially the same. This is not limited herein.

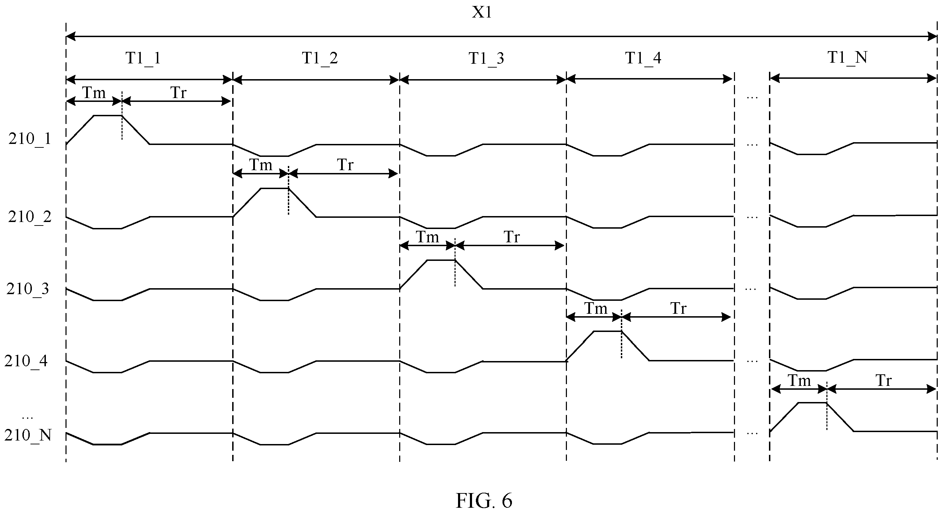

In addition, for the M control periodicities in the first cycle periodicity, a target power conversion unit in each control periodicity is a unit group selected in a sequence of the first unit group Z_1 to the $M^{th}$ unit group Z_M. The following provides detailed descriptions, with reference to FIG. 6, by using an example in which any unit group in the unit groups Z_1 to Z_M includes one power conversion unit and by using a first cycle periodicity X1 as an example. FIG. 6 is another diagram of the operating mode of the power conversion unit in the control periodicity according to an embodiment of this application. Refer to the figure. The first cycle periodicity X1 has N control periodicities: a first control periodicity to an $N^{th}$ control periodicity T1_1 to T1_N. Specifically, in the first control periodicity T1_1, the control unit 230 selects the power conversion unit 210_1 as the target power conversion unit, and selects the power conversion units 210_2 to 210_N as the coordinated power conversion units. In the second control periodicity T1_2, the control unit 230 selects the power conversion unit 210_2 as the target power conversion unit, and selects the power conversion units 210_1 and 210_3 to 210_N as the coordinated power conversion units. By analogy, in the $N^{th}$ control periodicity T1_N, the control unit 230 selects the power conversion unit 210_N as the target power conversion unit, and selects the power conversion units 210_1 to 210_N-1 as the coordinated power conversion units. In addition, for other operating processes in the first control periodicity to the $N^{th}$ control periodicity T1_1 to T1_N, refer to the foregoing described operating processes. Details are not described herein again. In addition, after the first cycle periodicity X1 ends, a selection process is performed again starting from the power conversion unit 210_1. Details are not described herein again.

It may be understood that a part of the cycle periodicities may be set as the first cycle periodicity, or all the cycle periodicities may be set as the first cycle periodicity.

Fixed-sequence selection manner 2:

In each control periodicity, one unit group is cyclically selected as the target power conversion unit according to a unidirectional fixed time sequence (for example, a reverse sequence). Based on this, every M control periodicities may form one cycle periodicity. Therefore, a plurality of consecutive cycle periodicities can occur, and the plurality of cycle periodicities have a second cycle periodicity. Specifically, the power conversion units 210_1 to 210_N are grouped into a first unit group Z_1 to an $M^{th}$ unit group Z_M that are disposed in sequence. For the M control periodicities in the second cycle periodicity, the target power conversion unit in each control periodicity is a unit group selected in a sequence of the $M^{th}$ unit group Z_M to the first unit group Z_1. In addition, for implementations of the unit groups Z_1 to Z_M, refer to the foregoing descriptions. Details are not described herein again.

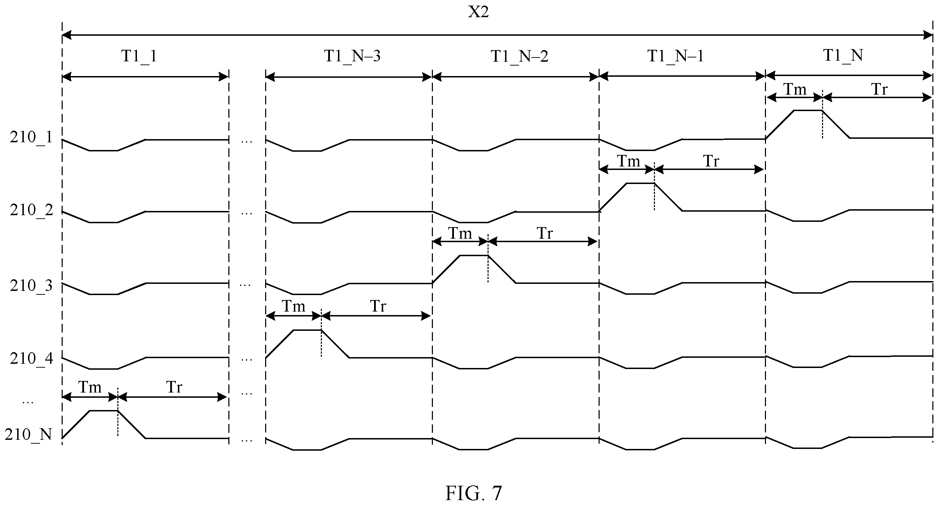

The following provides detailed descriptions, with reference to FIG. 7, by using an example in which any unit group in the unit groups Z_1 to Z_M includes one power conversion unit and by using a second cycle periodicity X2 as an example. FIG. 7 is another diagram of the operating mode of the power conversion unit in the control periodicity according to an embodiment of this application. Refer to FIG. 7. The second cycle periodicity X2 has N control periodicities: a first control periodicity to an $N^{th}$ control periodicity T1_1 to T1_N. Specifically, in the first control periodicity T1_1, the control unit 230 selects the power conversion unit 210_N as the target power conversion unit, and selects the power conversion units 210_1 to 210_N-1 as the coordinated power conversion units. By analogy, in the $(N-1)^{th}$ control periodicity T1_N-1, the control unit 230 selects the power conversion unit 210_2 as the target power conversion unit, and selects the power conversion units 210_1 and 210_3 to 210_N as the coordinated power conversion units. In the $N^{th}$ control periodicity T1_N, the control unit 230 selects the power conversion unit 210_1 as the target power conversion unit, and selects the power conversion units 210_2 to 210_N as the coordinated power conversion units. In addition, for other operating processes in the first control periodicity to the $N^{th}$ control periodicity T1_1 to T1_N, refer to the foregoing described operating processes. Details are not described herein again. In addition, after the second cycle periodicity X2 ends, a selection process is performed again starting from the power conversion unit 210_N. Details are not described herein again.

It may be understood that a part of the cycle periodicities may be set as the second cycle periodicity, or all the cycle periodicities may be set as the second cycle periodicity.

Fixed-sequence selection manner 3:

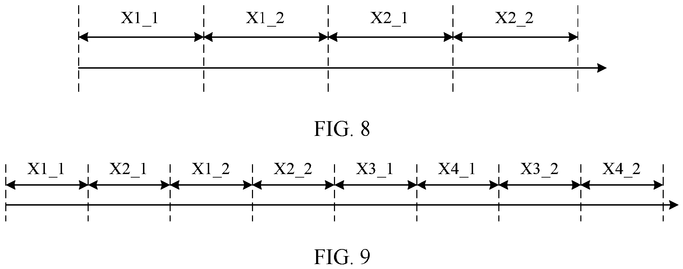

The first cycle periodicity and the second cycle periodicity are combined with each other, and the first cycle periodicity and the second cycle periodicity occur alternately. In this way, a bidirectional fixed time sequence cycle can be implemented. Specifically, for implementations of the unit groups Z_1 to Z_M, refer to the foregoing descriptions. Details are not described herein again. In addition, detailed descriptions are provided, with reference to FIG. 8, by using an example in which any unit group in the unit groups Z_1 to Z_M includes one power conversion unit and by using the first cycle periodicities X1_1 and X2_1 and the second cycle periodicities X1_2 to X2_2 as examples. FIG. 8 is another diagram of the operating mode of the power conversion unit in the control periodicity according to an embodiment of this application. Refer to FIG. 8. An operating process in a first cycle periodicity X1_1 is first performed. Then, an operating process in a second cycle periodicity X1_2 is performed. Then, the operating process in the first cycle periodicity X2_1 is performed. Then, the operating process in the second cycle periodicity X2_2 is performed. The rest may be deduced by analogy. Details are not described herein again. In addition, for the operating processes in the first cycle periodicities X1_1 and X2_1 and the second cycle periodicities X1_2 and X2_2, refer to the foregoing embodiments. Details are not described herein again.

Fixed-sequence selection manner 4:

The first cycle periodicity and the second cycle periodicity are combined with each other, and at least two adjacent first cycle periodicities and at least two adjacent second cycle periodicities occur alternately. In this way, a bidirectional fixed time sequence cycle can also be implemented. Specifically, for implementations of the unit groups Z_1 to Z_M, refer to the foregoing descriptions. Details are not described herein again. During specific implementation, a quantity of adjacent first cycle periodicities may be the same as a quantity of adjacent second cycle periodicities. For example, two adjacent first cycle periodicities and two adjacent second cycle periodicities occur alternately. Alternatively, three adjacent first cycle periodicities and three adjacent second cycle periodicities occur alternately. Alternatively, four adjacent first cycle periodicities and four adjacent second cycle periodicities occur alternately. Alternatively, a quantity of adjacent first cycle periodicities may be different from a quantity of adjacent second cycle periodicities. For example, two adjacent first cycle periodicities and three adjacent second cycle periodicities occur alternately. Alternatively, two adjacent first cycle periodicities and four adjacent second cycle periodicities occur alternately. Alternatively, three adjacent first cycle periodicities and four adjacent second cycle periodicities occur alternately.

The following provides detailed descriptions, with reference to FIG. 9, by using an example in which two adjacent first cycle periodicities and two adjacent second cycle periodicities occur alternately. FIG. 9 is a diagram of a cycle periodicity according to an embodiment of this application. Refer to FIG. 9. First, an operating process in a first cycle periodicity X1_1 is performed. Then, an operating process in a first cycle periodicity X2_1 is performed. Then, an operating process in a second cycle periodicity X1_2 is performed. Then, an operating process in a second cycle periodicity X2_2 is performed. Then, an operating process in a first cycle periodicity X3_1 is performed. Then, an operating process in a first cycle periodicity X4_1 is performed. Then, an operating process in a second cycle periodicity X3_2 is performed. Then, an operating process in a second cycle periodicity X4_2 is performed. The rest may be deduced by analogy. Details are not described herein again. In addition, for the operating processes in the first cycle periodicities X1_1 and X4_1 and the second cycle periodicities X1_2 and X4_2, refer to the foregoing descriptions. Details are not described herein again.

It may be understood that the foregoing random selection manner and the fixed-sequence selection manner may be performed independently of each other, or the foregoing random selection manner and the fixed-sequence selection manner may be combined with each other. This is not limited herein.

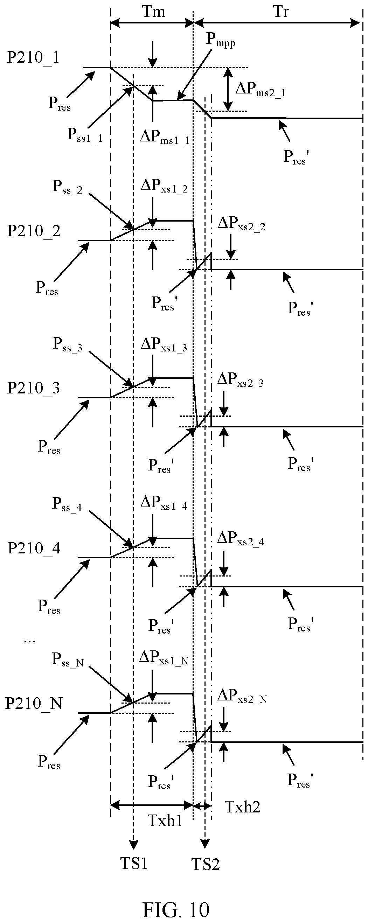

FIG. 10 is another diagram of the operating power of the power conversion unit according to an embodiment of this application, and is a variant of the implementations in the foregoing embodiments. The following describes only differences between this embodiment and the foregoing embodiments, and similarities are not described herein. Refer to FIG. 10. For example, the power conversion unit 210_1 is used as the target power conversion unit, and 210_2 to 210_N are used as the coordinated power conversion units. P210_1 represents an operating power of the power conversion unit 210_1, P210_2 represents an operating power of the power conversion unit 210_2, ..., and P210_N represents an operating power of the power conversion unit 210_N. In addition, for specific operating processes of the power conversion units 210_1 to 210_N, refer to the foregoing descriptions. Details are not described herein again. In specific application, the maximum power $P_{mpp}$ may be less than the original reference power $P_{res}$. Because the updated reference power $P_{res}'$ is less than or equal to the maximum power $P_{mpp}$, the updated reference power $P_{res}'$ is less than the original reference power $P_{res}$. In addition, when the phase Tm ends, the operating powers of the coordinated power conversion units 210_2 to 210_N are controlled to be directly switched to the updated reference power $P_{res}$'. However, in actual operation, there is a change process for switching the operating powers of the coordinated power conversion units 210_2 to 210_N, and time of the change process is usually short. Certainly, under an ideal condition, the operating powers of the coordinated power conversion units 210_2 to 210N may alternatively be directly changed to the updated reference power $P_{res}$'. Based on this, in the phase Txh2, the operating powers of the coordinated power conversion units 210_2 to 210_N are controlled to be adjusted based on the updated reference power $P_{res}$'. Based on this, the target power variation $\Delta P_{ms1\_1}$ is a variation between an instantaneous operating power $P_{ss1\_1}$ of the target power conversion unit 210_1 at a moment TS1 and the reference power $P_{res}$ before update. The target power variation $\Delta P_{ms2\_1}$ is a variation between an instantaneous operating power $P_{ss2\_1}$ of the target power conversion unit 210_1 at a moment TS2 and the reference power $P_{res}$ before update. The coordinated power variation $\Delta P_{xs1\_2}$ is a variation between an instantaneous operating power $P_{ss1\_2}$ of the coordinated power conversion unit 210_2 at the moment TS1 and the coordinately adjusted specified power (namely, the original reference power $P_{res}$). The coordinated power variation $\Delta P_{xs2\_2}$ is a variation between an instantaneous operating power $P_{ss2\_2}$ of the coordinated power conversion unit 210_2 at the moment TS2 and the updated reference power $P_{res}$'. Similarly, coordinated power variations $\Delta P_{xs1\_3}$ to $\Delta P_{xs1\_N}$ and $\Delta P_{xs2\_3}$ to $\Delta P_{xs2\_N}$ may be deduced by analogy. Details are not described herein again.

In addition, refer to FIG. 10. The moment TS1 is used as an example. The target power variation $\Delta P_{ms1\_1}$ of the target power conversion unit 210_1 in the mode switching process is relatively decreased. In this case, the target power variation $\Delta P_{ms1\_1}$ is a negative value, that is, a sign of the target power variation $\Delta P_{ms1\_1}$ is negative. Therefore, a sum $\Delta P_{msm}$ (in this case, $\Delta P_{msm}=\Delta P_{ms1\_1}$) of the target power variations is also negative, and a sign of the sum $\Delta P_{msm}$ is also negative. To reduce fluctuation of the total output power and the output voltage of the power conversion unit, the coordinated power variations $\Delta P_{xs1\_2}$ to $\Delta P_{xs1\_N}$ are used to offset the target power variation $\Delta P_{ms1\_1}$. In this case, the coordinated power conversion units need to be controlled to coordinately increase corresponding powers based on the reference power (for example, the original reference power $P_{res}$ before update), so that the coordinated power variations $\Delta P_{xs1\_2}$ to $\Delta P_{xs1\_N}$ are positive values, that is, sign s of $\Delta P_{xs1\_2}$ to $\Delta P_{xs1\_N}$ are positive. Therefore, a sum of the coordinated power variations $\Delta P_{xs1\_2}$ to $\Delta P_{xs1\_N}$ is also a positive value, and a sign of the sum is also positive. In addition, when the phase Tm ends, the operating powers of the coordinated power conversion units 210_2 to 210_N are controlled to be directly switched to the updated reference power $P_{res}$'. To continue to perform coordinated adjustment in the phase Txh2, the control unit further controls, in the phase Txh2, the operating powers of the coordinated power conversion units 210_2 to 210_N to be coordinately adjusted based on the updated reference power $P_{res}$'. Based on this, the moment TS2 is used as an example. The target power variation $\Delta P_{ms2\_1}$ of the target power conversion unit 210_1 in the mode switching process is also relatively decreased. In this case, the target power variation $\Delta P_{ms2\_1}$ is a negative value, that is, a sign of the target power variation $\Delta P_{ms2\_1}$ is negative. Therefore, a sum $\Delta P_{msm}$ (in this case, $\Delta P_{msm}=\Delta P_{ms2\_1}$) of the target power variations is also negative, and a sign of the sum $\Delta P_{msm}$ is also negative. To reduce fluctuation of the total output power and the output voltage of the power conversion unit, the coordinated power variations $\Delta P_{xs2\_2}$ to $\Delta P_{xs2\_N}$ are used to offset the target power variation $\Delta P_{ms2\_1}$. In this case, the coordinated power conversion units need to be controlled to coordinately increase corresponding powers based on the reference power (for example, the updated reference power $P_{res}$'), so that the coordinated power variations $\Delta P_{xs2\_2}$ to $\Delta P_{xs2\_N}$ are positive values, that is, signs of $\Delta P_{xs2\_2}$ to $\Delta P_{xs2\_N}$ are positive. Therefore, a sum of the coordinated power variations $\Delta P_{xs2\_2}$ to $\Delta P_{xs2\_N}$ is also a positive value, and a sign of the sum is also positive.

For example, refer to FIG. 10. The moment TS1 is used as an example. $\Delta P_{msm}=\Delta P_{ms1\_1}$. The coordinated power conversion unit 210_2 is used as a first coordinated power conversion unit, and the coordinated power conversion unit 210_2 corresponds to an allocation weight $\alpha_1$. In this case, the coordinated power variation $\Delta P_{xs1\_2}$ corresponding to the coordinated power conversion unit 210_2 is $-\alpha_1 * \Delta P_{msm}$, that is, $\Delta P_{xs1\_2}=-\alpha_1 * \Delta P_{ms1\_1}$. The coordinated power conversion unit 210_3 is used as a second coordinated power conversion unit, and the coordinated power conversion unit 210_3 corresponds to an allocation weight ($\alpha_2$. In this case, the coordinated power variation $\Delta P_{xs1\_3}$ corresponding to the coordinated power conversion unit 210_3 is $-\alpha_2 * \Delta P_{msm}$, that is, $\Delta P_{xs1\_3}=-\alpha_2 * \Delta P_{ms1\_1}$. The coordinated power conversion unit 210_4 is used as a third coordinated power conversion unit, and the coordinated power conversion unit 210_4 corresponds to an allocation weight $\alpha_3$. In this case, the coordinated power variation $\Delta P_{xs1\_4}$ corresponding to the coordinated power conversion unit 210_4 is $-\alpha_3 * \Delta P_{msm}$, that is, $\Delta P_{xs1\_4}=-\alpha_3 * \Delta P_{ms1\_1}$. By analogy, the coordinated power conversion unit 210_N is used as an $m^{th}$ coordinated power conversion unit, and the coordinated power conversion unit 210_N corresponds to an allocation weight $\alpha_m$. In this case, the coordinated power variation $\Delta P_{xs1\_N}$ corresponding to the coordinated power conversion unit 210_N is $-\alpha_m * \Delta P_{msm}$, that is, $\Delta P_{xs1\_N}=-\alpha_m * \Delta P_{ms1\_1}$.

The moment TS2 is used as an example. $\Delta P_{msm}=\Delta P_{ms2\_1}$. The coordinated power conversion unit 210_2 is used as a first coordinated power conversion unit, and the coordinated power conversion unit 210_2 corresponds to an allocation weight $\alpha_1$. In this case, the

coordinated power variation $\Delta P_{xs2\_2}$ corresponding to the coordinated power conversion unit 210_2 is $-\alpha_1*\Delta P_{msm}$, that is, $\Delta P_{xs2\_2}=\alpha_1*\Delta P_{ms2\_1}$. The coordinated power conversion unit 210_3 is used as a second coordinated power conversion unit, and the coordinated power conversion unit 210_3 corresponds to an allocation weight ($\alpha_2$. In this case, the coordinated power variation $\Delta P_{xs2\_3}$ corresponding to the coordinated power conversion unit 210_3 is $-\alpha_2*\Delta P_{msm}$, that is, $\Delta P_{xs2\_3}=-\alpha_2*\Delta P_{ms2\_1}$. The coordinated power conversion unit 210_4 is used as a third coordinated power conversion unit, and the coordinated power conversion unit 210_4 corresponds to an allocation weight $\alpha_3$. In this case, the coordinated power variation $\Delta P_{xs2\_4}$ corresponding to the coordinated power conversion unit 210_4 is $-\alpha_3*\Delta P_{msm}$, that is, $\Delta P_{xs2\_4}=-\alpha_3*\Delta P_{ms2\_1}$. By analogy, the coordinated power conversion unit 210_N is used as an $m^{th}$ coordinated power conversion unit, and the coordinated power conversion unit 210_N corresponds to an allocation weight $\alpha_m$. In this case, the coordinated power variation $\Delta P_{xs2\_N}$ corresponding to the coordinated power conversion unit 210_N is $-\alpha_m*\Delta P_{msm}$, that is, $\Delta P_{xs2\_N}=-\alpha_m*\Delta P_{ms2\_1}$.

Still refer to FIG. 10. Each coordinated power variation and each target power variation may occur in a same phase. To be specific, an occurrence moment of each coordinated power variation is the same as an occurrence moment of each target power variation, and an end moment of each coordinated power variation is the same as an end moment of each target power variation. For example, the coordinated power variations $\Delta P_{xs1\_2}$ to $\Delta P_{xs1\_N}$ and the target power variation $\Delta P_{ms1\_1}$ occur at the same TS1 moment, and the coordinated power variations $\Delta P_{xs2\_2}$ to $\Delta P_{xs2\_N}$ and the target power variation $\Delta P_{ms2\_1}$ occur at the same TS2 moment. In this way, timeliness of coordinated control can be improved, so that when the operating power variation occurs in the target power conversion unit, the coordinated power conversion unit can be controlled in time to coordinately adjust the occurring coordinated power variation, to offset the operating power variation by using the coordinated power variation, so as to reduce fluctuation of the output power and the output voltage of the power conversion unit.

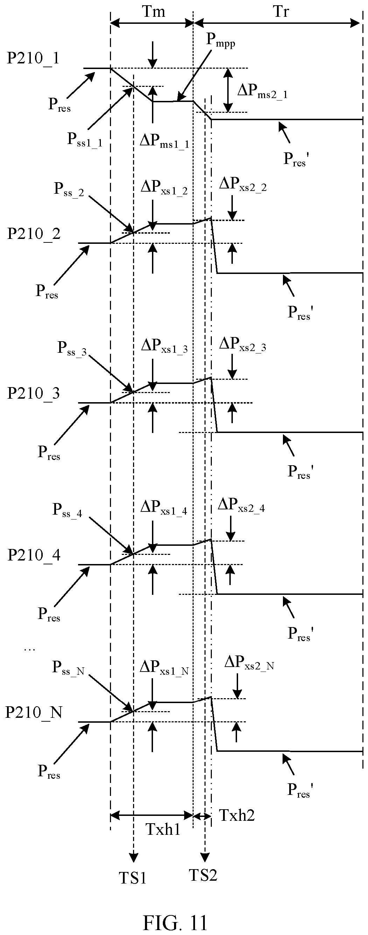

FIG. 11 is another diagram of the operating power of the power conversion unit according to an embodiment of this application, and is a variant of the implementations in the foregoing embodiments. The following describes only differences between this embodiment and the foregoing embodiments, and similarities are not described herein. Refer to FIG. 11. For example, the power conversion unit 210_1 is used as the target power conversion unit, and 210_2 to 210_N are used as the coordinated power conversion units. P210_1 represents an operating power of the power conversion unit 210_1, P210_2 represents an operating power of the power conversion unit 210_2, ..., and P210_N represents an operating power of the power conversion unit 210_N.

In addition, for specific operating processes of the power conversion units 210_1 to 210_N, refer to the foregoing descriptions. Details are not described herein again. In addition, when the phase Txh2 ends, the operating powers of the coordinated power conversion units 210_2 to 210_N are controlled to be directly switched to the updated reference power $P_{res}$'. However, in actual operation, there is a change process for switching the operating powers of the coordinated power conversion units 210_2 to 210_N, and time of the change process is usually short. Certainly, under an ideal condition, the operating powers of the coordinated power conversion units 210_2 to 210_N may alternatively be directly changed to the updated reference power $P_{res}$'. In addition, in the phase Txh1 and the phase Txh2, the operating powers of the coordinated power conversion units 210_2 to 210_N are controlled to be adjusted based on the original reference power $P_{res}$. Based on this, the target power variation $\Delta P_{ms1\_1}$ is a variation between an instantaneous operating power $P_{ss1\_1}$ of the target power conversion unit 210_1 at a moment TS1 and the reference power $P_{res}$ before update. The target power variation $\Delta P_{ms2\_1}$ is a variation between an instantaneous operating power $P_{ss2\_1}$ of the target power conversion unit 210_1 at a moment TS2 and the reference power $P_{res}$ before update. The coordinated power variation $\Delta P_{xs1\_2}$ is a variation between an instantaneous operating power $P_{ss1\_2}$ of the coordinated power conversion unit 210_2 at the moment TS1 and the specified power (for example, the original reference power $P_{res}$). The coordinated power variation $\Delta P_{xs2\_2}$ is a variation between an instantaneous operating power $P_{ss2\_2}$ of the coordinated power conversion unit 210_2 at the moment TS2 and the specified power (for example, the original reference power $P_{res}$ or the updated reference power $P_{res}$'). Similarly, coordinated power variations $\Delta P_{xs1\_3}$ to $\Delta P_{xs1\_N}$ and $\Delta P_{xs2\_3}$ to $\Delta P_{xs2\_N}$ may be deduced by analogy. Details are not described herein again.

In addition, refer to FIG. 11. The moment TS1 is used as an example. The target power variation $\Delta P_{ms1\_1}$ of the target power conversion unit 210_1 in the mode switching process is relatively decreased. In this case, the target power variation $\Delta P_{ms1\_1}$ is a negative value, that is, a sign of the target power variation $\Delta P_{ms1\_1}$ is negative. Therefore, a sum $\Delta P_{msm}$ (in this case, $\Delta P_{msm}=\Delta P_{ms1\_1}$) of the target power variations is also negative, and a sign of the sum $\Delta P_{msm}$ is also negative. To reduce fluctuation of the total output power and the output voltage of the power conversion unit, the coordinated power variations $\Delta P_{xs1\_2}$ to $\Delta P_{xs1\_N}$ are used to offset the target power variation $\Delta P_{ms1\_1}$. In this case, the coordinated power conversion units need to be controlled to coordinately increase corresponding powers based on the reference power (for example, the original reference power $P_{res}$ before update), so that the coordinated power variations $\Delta P_{xs1\_2}$ to $\Delta P_{xs1\_N}$ are positive values, that is, sign s of $\Delta P_{xs1\_2}$ to $\Delta P_{xs1\_N}$ are positive. Therefore, a sum of the coordinated power variations $\Delta P_{xs1\_2}$ to

$\Delta P_{xs1\_N}$ is also a positive value, and a sign of the sum is also positive. In addition, when the phase Tm ends, the operating powers of the coordinated power conversion units 210_2 to 210_N are controlled to be directly switched to the updated reference power $P_{res}$'. To continue to perform coordinated adjustment in the phase Txh2, the control unit further controls, in the phase Txh2, the operating powers of the coordinated power conversion units 210_2 to 210_N to be coordinately adjusted based on the updated reference power $P_{res}$'. Based on this, the moment TS2 is used as an example. The target power variation $\Delta P_{ms2\_1}$ of the target power conversion unit 210_1 in the mode switching process is also relatively decreased. In this case, the target power variation $\Delta P_{ms2\_1}$ is a negative value, that is, a sign of the target power variation $\Delta P_{ms2\_1}$ is negative. Therefore, a sum $\Delta P_{msm}$ (in this case, $\Delta P_{msm}=\Delta P_{ms2\_1}$) of the target power variations is also negative, and a sign of the sum $\Delta P_{msm}$ is also negative. To reduce fluctuation of the total output power and the output voltage of the power conversion unit, the coordinated power variations $\Delta P_{xs2\_2}$ to $\Delta P_{xs2\_N}$ are used to offset the target power variation $\Delta P_{ms2\_1}$. In this case, the coordinated power conversion units need to be controlled to coordinately increase corresponding powers based on the reference power (for example, the updated reference power $P_{res}$'), so that the coordinated power variations $\Delta P_{xs2\_2}$ to $\Delta P_{xs2\_N}$ are positive values, that is, signs of $\Delta P_{xs2\_2}$ to $\Delta P_{xs2\_N}$ are positive. Therefore, a sum of the coordinated power variations $\Delta P_{xs2\_2}$ to $\Delta P_{xs2\_N}$ is also a positive value, and a sign of the sum is also positive.

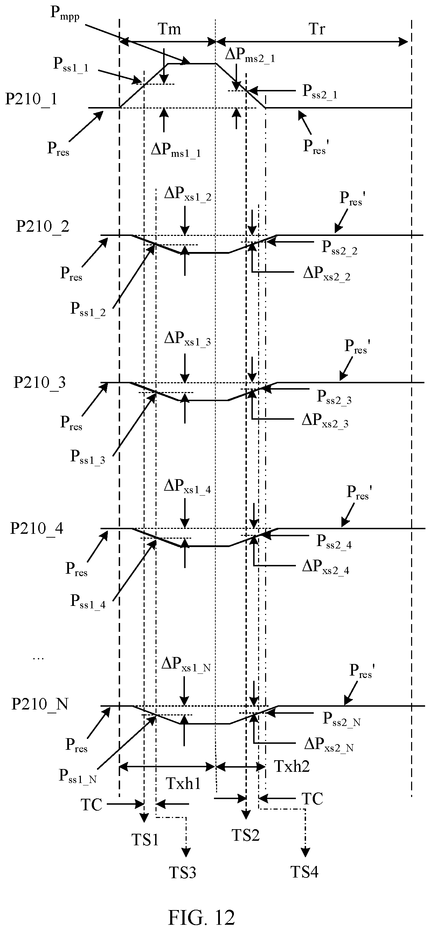

FIG. 12 is another diagram of the operating power of the power conversion unit according to an embodiment of this application, and is a variant of the implementations in the foregoing embodiments. The following describes only differences between this embodiment and the foregoing embodiments, and similarities are not described herein. Refer to FIG. 12. For example, the power conversion unit 210_1 is used as the target power conversion unit, and 210_2 to 210_N are used as the coordinated power conversion units. P210_1 represents an operating power of the power conversion unit 210_1, P210_2 represents an operating power of the power conversion unit 210_2, ..., and P210_N represents an operating power of the power conversion unit 210_N. Implementations of the target power variations $\Delta P_{ms1\_1}$ to $\Delta P_{ms2\_1}$ and the coordinated power variations $\Delta P_{xs1\_2}$ to $\Delta P_{xs1\_N}$ and $\Delta P_{xs2\_2}$ to $\Delta P_{xs2\_N}$ are basically the same as those in the foregoing embodiments, and a difference is as follows: A phase in which each coordinated power variation occurs is later than a phase in which each operating power variation occurs, that is, the phase in which each coordinated power variation occurs has an overall delay compared with the phase in which each operating power variation occurs. For example, the phase in which each coordinated power variation occurs is delayed by a delay time parameter $T_{delay}$ compared with the phase in which each operating power variation occurs. That is, an occurrence moment of each coordinated power variation is later than an occurrence moment of each target power variation by the specific delay time parameter $T_{delay}$, and an end moment of each coordinated power variation is also later than an end moment of each target power variation by the specific delay time parameter $T_{delay}$. For example, if the target power variation $\Delta P_{ms1\_1}$ occurs at the moment TS1, and arrives at a moment TS3 after the delay time parameter $T_{delay}$ starting from the moment TS1, the coordinated power variations $\Delta P_{xs1\_2}$ to $\Delta P_{xs1\_N}$ occur at the moment TS3. Similarly, if the target power variation $\Delta P_{ms2\_1}$ occurs at the moment TS2, and arrives at a moment TS4 after the delay time parameter $T_{delay}$ starting from the moment TS2, the coordinated power variations $\Delta P_{xs2\_2}$ to $\Delta P_{xs2\_N}$ occur at the moment TS4. It may be understood that specific time of the delay time parameter $T_{delay}$ may be determined based on a requirement of an actual application scenario. This is not limited herein.

Based on this, the coordinated power variation corresponding to the $y^{th}$ coordinated power conversion unit may be: $-\alpha_y*\Delta P_{msm}*e^{-T_{delay}s}$, where $e^{-T_{delay}s}$ represents a pull transformation expression form when a delay occurs, and $T_{delay}$ represents the delay time parameter. A value of $T_{delay}$ may be determined by a system feature, or may be configured online or offline through control. In this way, an operating power of the $y^{th}$ coordinated power conversion unit decreases (or increases) based on the coordinated power variation, and is delayed by the delay time parameter $T_{delay}$, so that there is a time interval $T_{delay}$ between the target power variation and the corresponding coordinated power variation.

It may be understood that, because a specific delay occurs in signal transmission in an actual running process of the power conversion system, the delay time parameter $T_{delay}$ may be a delay that occurs during running of the power conversion system, and is not manually set in an online manner or an offline manner. Certainly, to cooperate with the delay of the power conversion system, the delay time parameter $T_{delay}$ may alternatively be manually set to a fixed value or a variable value in an online manner or an offline manner.

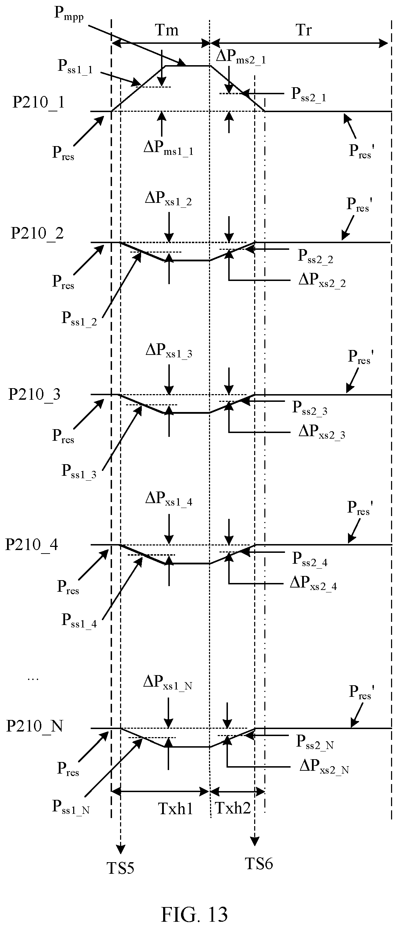

FIG. 13 is another diagram of the operating power of the power conversion unit according to an embodiment of this application, and is a variant of the implementations in the foregoing embodiments. The following describes only differences between this embodiment and the foregoing embodiments, and similarities are not described herein. Refer to FIG. 13. For example, the power conversion unit 210_1 is used as the target power conversion unit, and 210_2 to 210_N are used as the coordinated power conversion units. P210_1 represents an operating power of the power conversion unit 210_1, P210_2 represents an operating power of the power conversion unit 210_2, ..., and P210_N represents an operating power of the power conversion unit 210_N. Implementations of the target power variations $\Delta P_{ms1\_1}$ to $\Delta P_{ms2\_1}$ and the coordinated power variations $\Delta P_{xs1\_2}$

to $\Delta P_{xs1\text{-}N}$ and $\Delta P_{xs2\text{-}2}$ to $\Delta P_{xs2\_N}$ are basically the same as those in the foregoing embodiments, and a difference is as follows: The sum $\Delta P_{msm}$ of the target power variations is compared with a reference threshold $\Delta P_{err}$, and when the sum $\Delta P_{msm}$ of the target power variations is less than the reference threshold $\Delta P_{err}$, it may be considered that a power change of the target power conversion unit has small impact on the total output power and the output voltage. In this case, the operating power of the coordinated power conversion unit does not need to be controlled to be coordinately adjusted. However, when the sum $\Delta P_{msm}$ of the target power variations is greater than or equal to the reference threshold $\Delta P_{err}$, it may be considered that the power change of the target power conversion unit has large impact on the total output power and the output voltage. In this case, the operating power of the coordinated power conversion unit is controlled to be coordinately adjusted. Specifically, in response to a condition that the sum $\Delta P_{msm}$ of the target power variations is greater than or equal to the reference threshold $\Delta P_{err}$, the control unit can control, based on the target power variation of the target power conversion unit in the mode switching process, the operating power of the coordinated power conversion unit to be coordinately adjusted based on the specified power. For example, when $\Delta P_{msm} < \Delta P_{err}$, the operating powers of the coordinated power conversion units 210_2 to 210_N are controlled not to be adjusted. When $\Delta P_{msm} \geq \Delta P_{err}$, the operating powers of the coordinated power conversion units 210_2 to 210_N are controlled to be coordinately adjusted based on the specified power, so that the coordinated power variation corresponding to the $y^{th}$ coordinated power conversion unit is $-\alpha_y * \Delta P_{msm}$. $\Delta P_{xs1\text{-}2}$ to $\Delta P_{xs1\_N}$ and $\Delta P_{xs2\_2}$ to $\Delta P_{xs2\_N}$ of the coordinated power conversion units 210_2 to 210_N are generated, and the operating powers of the coordinated power conversion units 210_2 to 210_N are adjusted (for example, increased or decreased) based on $\Delta P_{xs1\_2}$ to $\Delta P_{xs1\_N}$ and $\Delta P_{xs2\_2}$ to $\Delta P_{xs2\_N}$. For example, refer to FIG. 7. Before a moment TS5, $\Delta P_{msm} < \Delta P_{err}$, and the coordinated power conversion units 210_2 to 210_N are controlled to operate at the original reference power $P_{res}$. After a moment TS6, $\Delta P_{msm} < \Delta P_{err}$, and the coordinated power conversion units 210_2 to 210_N are controlled to operate at the updated reference power $P_{res}'$. Between the moment TS5 and the moment TS6, $\Delta P_{msm} \geq \Delta P_{err}$, and the coordinated power variation corresponding to the $y^{th}$ coordinated power conversion unit is in a relationship of $-\alpha_y * \Delta P_{msm}$. The operating powers of the coordinated power conversion units 210_2 to 210_N are controlled to be coordinately adjusted (for example, increased or decreased) based on the specified power.

It may be understood that a specific value of the reference threshold $\Delta P_{err}$ may be configured online or offline according to an actual application requirement.

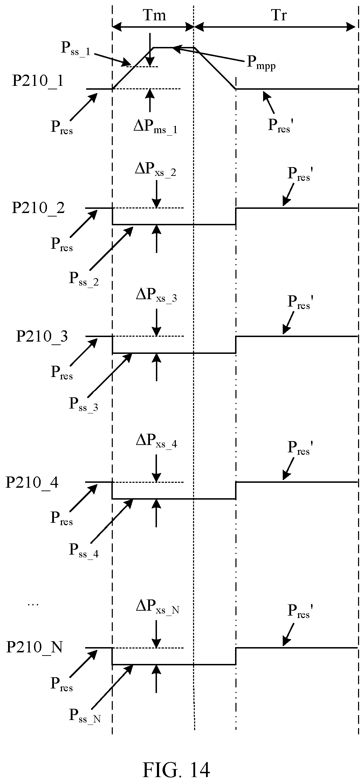

FIG. 14 is another diagram of the operating power of the power conversion unit according to an embodiment of this application, and is a variant of the implementations in the foregoing embodiments. The following describes only differences between this embodiment and the foregoing embodiments, and similarities are not described herein. Refer to FIG. 14. For example, the power conversion unit 210_1 is used as the target power conversion unit, and 210_2 to 210_N are used as the coordinated power conversion units. P210_1 represents an operating power of the power conversion unit 210_1, P210_2 represents an operating power of the power conversion unit 210_2, ..., and P210_N represents an operating power of the power conversion unit 210_N. In addition, each coordinated power variation may alternatively be determined based on a constant coordinated power specified value $\Delta P_{syn0}$. The constant coordinated power specified value $\Delta P_{syn0}$ is a power coordination preset parameter. The constant coordinated power specified value $\Delta P_{syn0}$ may be set as a required fixed value or changed value online or offline, or may be configured based on the maximum power obtained in the MPPT mode, or the like.

For example, a coordinated power variation corresponding to a $z^{th}$ coordinated power conversion unit in the m coordinated power conversion units may be $-\alpha_z * \Delta P_{syn0}$, where $\alpha_z$ represents an allocation weight corresponding to the $z^{th}$ coordinated power conversion unit, $\alpha_z \in [0,1]$, and $\Delta P_{syn0}$ represents the constant coordinated power specified value. In this way, the sign of the sum of the coordinated power variations corresponding to the coordinated power conversion units is opposite to the sign of the sum of the target power variations, and $\Delta P_{syn0}$ can be allocated to different coordinated power conversion units based on the allocation weight $\alpha_z$. It may be understood that for an implementation of $\alpha_z$, refer to the implementation of $\alpha_y$. Details are not described herein again.

For example, refer to FIG. 14. When the target power variation of the target power conversion unit 210_1 is $\Delta P_{ms\_1}$, $\Delta P_{msm} = \Delta P_{ms\_1}$. The coordinated power variation corresponding to the $z^{th}$ coordinated power conversion unit is in a relationship of $-\alpha_z * \Delta P_{syn0}$. Therefore, the coordinated power conversion unit 210_2 is used as a first coordinated power conversion unit, and the coordinated power conversion unit 210_2 corresponds to an allocation weight $\alpha_1$. In this case, the coordinated power variation $\Delta P_{xs\_2}$ corresponding to the coordinated power conversion unit 210_2 is $-\alpha_1 * \Delta P_{syn0}$, that is, $\Delta P_{xs\_2} = -\alpha_1 * \Delta P_{syn0}$, so that the operating power of the coordinated power conversion unit 210_2 is adjusted (for example, decreased) by $\Delta P_{xs\_2}$ based on the original reference power $P_{res}$. The coordinated power conversion unit 210_3 is used as a second coordinated power conversion unit, and the coordinated power conversion unit 210_3 corresponds to an allocation weight ($\alpha_2$. In this case, the coordinated power variation $\Delta P_{xs\_3}$ corresponding to the coordinated power conversion unit 210_3 is $-\alpha_2 * \Delta P_{syn0}$, that is, $\Delta P_{xs\_3} = -\alpha_2 * \Delta P_{syn0}$, so that the operating power of the coordinated power conversion unit 210_3 is adjusted (for example, decreased) by

$\Delta P_{xs\_3}$ based on the original reference power $P_{res}$. The coordinated power conversion unit 210_4 is used as a third coordinated power conversion unit, and the coordinated power conversion unit 210_4 corresponds to an allocation weight $\alpha_3$. In this case, the coordinated power variation $\Delta P_{xs\_4}$ corresponding to the coordinated power conversion unit 210_4 is $-\alpha_3{}^*\Delta P_{syn0}$, that is, $\Delta P_{xs\_4}=-\alpha_3{}^*\Delta P_{syn0}$, so that the operating power of the coordinated power conversion unit 210_4 is adjusted (for example, decreased) by $\Delta P_{xs\_4}$ based on the original reference power $P_{res}$. By analogy, the coordinated power conversion unit 210_N is used as an $m^{th}$ coordinated power conversion unit, and the coordinated power conversion unit 210_N corresponds to an allocation weight $\alpha_m$. In this case, the coordinated power variation $\Delta P_{xs\_N}$ corresponding to the coordinated power conversion unit 210_N is $-\alpha_m{}^*\Delta P_{syn0}$, that is, $\Delta P_{xs\_N}=-\alpha_m{}^*\Delta P_{syn0}$, so that the operating power of the coordinated power conversion unit 210_N is adjusted (for example, decreased) by $\Delta P_{xs\_N}$ based on the original reference power $P_{res}$.

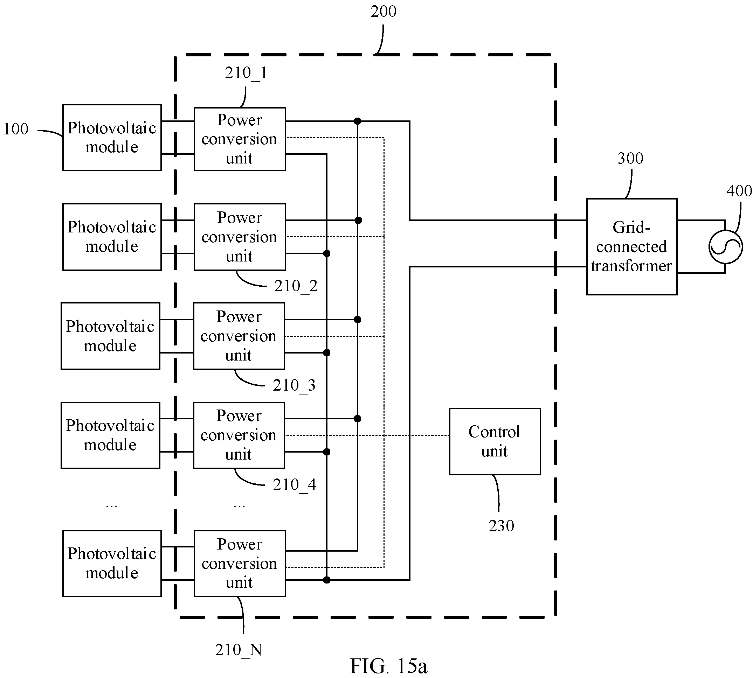

FIG. 15a is a diagram of another structure of the power conversion system according to an embodiment of this application. Refer to FIG. 15a. The power conversion system 200 includes N power conversion units 210_1 to 210_N (N is an integer and N≥2) and a control unit 230, so that the power conversion system is set to a photovoltaic inverter of a single-stage architecture. An input terminal of each of the power conversion units 210_1 to 210_N is separately connected to the photovoltaic module 100 used as a direct current power supply, and an output terminal of each of the power conversion units 210_1 to 210_N is connected to the power grid 400 via the grid-connected transformer 300. In specific application, each of the power conversion units 210_1 to 210_N converts a direct current input by the photovoltaic module 100 into an alternating current, and then outputs the alternating current to the grid-connected transformer 300. The grid-connected transformer 300 performs boost conversion or buck conversion, and then outputs a current obtained through the boost conversion or buck conversion to the power grid 400. Certainly, in actual application, the grid-connected transformer 300 may not need to be disposed, and the output terminal of the power conversion system 200 is directly connected to the power grid 400. In addition, the output terminal of the power conversion unit may alternatively be connected to a load to supply power to the load. Alternatively, the output terminal of the power conversion unit may be directly connected to the alternating current system.

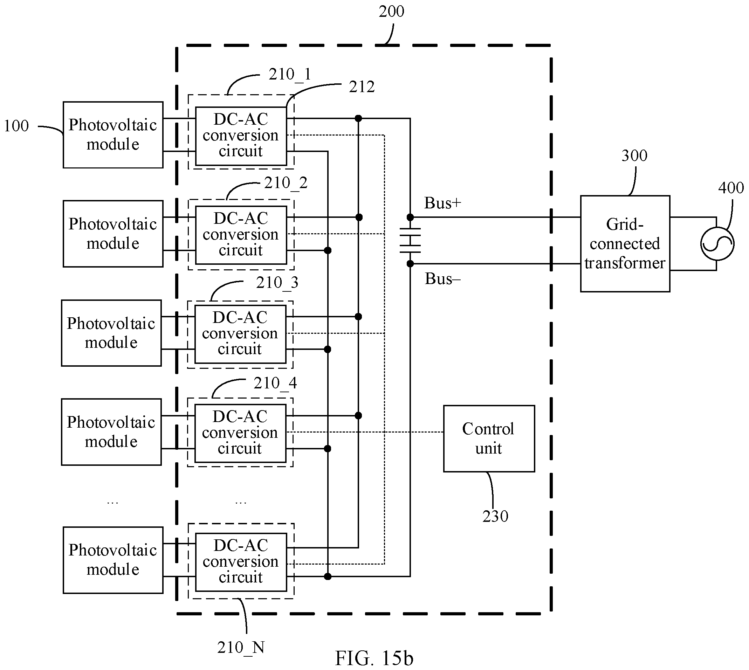

FIG. 15b is a diagram of another structure of a power conversion system according to an embodiment of this application. Refer to FIG. 15b. The power conversion unit may be a DC-AC conversion circuit 212. In addition, a first terminal of the DC-AC conversion circuit 212 is configured to connect to the photovoltaic module 100 used as the direct current power supply, and a second terminal of the DC-AC conversion circuit 212 is configured to connect to a load, the power grid, or the alternating current system. For example, the DC-AC conversion circuit 212 is configured to convert a direct current input by the photovoltaic module into an alternating current, and then output the alternating current to the load, the power grid, or the alternating current system. Other content in this embodiment may be basically the same as the content in the foregoing embodiments. Details are not described herein.

In still some examples, the power conversion unit may alternatively be a DC-DC conversion circuit. A first terminal of the direct current-direct current conversion circuit is configured to connect to a direct current power supply, and a second terminal of the direct current-direct current conversion circuit is configured to connect to a load, an energy storage unit, or a power generation unit. For example, the DC-DC conversion circuit is configured to: perform power conversion on a direct current input by the direct current power supply, and then output a current obtained through the conversion to the load, the energy storage unit, or the power generation unit. Alternatively, the DC-DC conversion circuit can be configured to: perform power conversion on a direct current input by the energy storage unit or the power generation unit, and then output a current obtained through the conversion to the direct current power supply. For example, the direct current power supply is a photovoltaic module.

In still some examples, the power conversion unit may alternatively be an AC-DC conversion circuit. A first terminal of the alternating current-direct current conversion circuit is configured to connect to an alternating current power supply, and a second terminal of the alternating current-direct current conversion circuit is configured to connect to a load, an energy storage unit, or a power generation unit. For example, the AC-DC conversion circuit is configured to: convert an alternating current input by an alternating current power supply into a direct current, and then output the direct current to the load, the energy storage unit, or the power generation unit. Alternatively, the AC-DC conversion circuit can be configured to: convert a direct current input by the energy storage unit or the power generation unit into an alternating current, and then output the alternating current to an alternating current power supply.

In still some examples, the power conversion system may alternatively be an AC-DC conversion circuit, and the power conversion system further includes a DC-AC conversion circuit. A first terminal of the alternating current-direct current conversion circuit is configured to connect to an alternating current power supply, a second terminal of the alternating current-direct current conversion circuit is connected to a first terminal of the direct current-alternating current conversion circuit, and a second terminal of the direct current-alternating current conversion circuit is configured to connect to a load or a power grid. For example, the AC-DC conversion circuit is configured to: convert an alternating current input by an alternating current power supply into a direct current, and then output the direct current to the DC-AC conversion circuit. The DC-AC conversion circuit is configured to: convert an input direct current into an alternating current, and then output the alternating current to the load, an energy storage unit, or a power generation unit. Alternatively, the DC-AC conversion circuit can convert an alternating current input by an energy storage unit or a power generation unit into a direct current, and then output the direct current to the AC-DC conversion circuit. The AC-DC conversion circuit can convert an input direct current into an alternating current, and then output the alternating current to an alternating current power supply.

In addition, when the power conversion unit in the power conversion system provided in embodiments of this application is connected to the energy storage unit, the power conversion unit may be further an energy storage converter to be used in the energy storage system.

An embodiment of this application further provides a power update control method. The power update control method is applied to a power conversion system. The power conversion system includes N power conversion units, and N is an integer and N≥2. A first terminal of each power conversion unit is configured to connect to a direct current power supply or an alternating current power supply, and a second terminal of each power conversion unit is configured to connect to a load, an energy storage unit, or a power grid. The power conversion unit is configured to: convert a direct current input by the direct current power supply or an alternating current input by the alternating current power supply, and then output a current obtained through the conversion. In addition, the power update control method includes: controlling, in a control periodicity, operating modes of one or more target power conversion units in the N power conversion units to be switched between a PR mode and a MPPT mode, and updating a reference power based on a maximum power obtained in the MPPT mode, for an operating power of the target power conversion unit obtained after switching from the MPPT mode to the PR mode to be an updated reference power, where the updated reference power is less than or equal to the maximum power; and controlling an operating mode of a coordinated power conversion unit other than the target power conversion unit in the N power conversion units to remain unchanged, and controlling, based on an operating power variation of the target power conversion unit in the mode switching process, an operating power of the coordinated power conversion unit to be coordinately adjusted, for a total variation of operating powers of the N power conversion units to be less than a variation threshold.

An embodiment of this application further provides a power supply system. The power supply system includes a power conversion system. A first terminal of a power conversion unit in the power conversion system is connected to a direct current power supply or an alternating current power supply, and a second terminal of the power conversion system is configured to connect to a load, an energy storage unit, a power generation unit, or a power grid. In addition, the power conversion system is configured to: convert a direct current input by the direct current power supply or an alternating current input by the alternating current power supply into, and then output a current obtained through the conversion. The power conversion system is the power conversion system in any one of the foregoing embodiments. According to the power conversion system provided in embodiments of this application, an operating power of the power conversion unit in the PR mode can be updated, and fluctuation of an output power and an output voltage of the power conversion unit can be reduced, so that stability and control precision of the power supply system can be improved.

If the foregoing power supply system can be a photovoltaic system, the power supply system further includes a photovoltaic module. In addition, a first terminal of the power conversion unit in the power conversion system is connected to the photovoltaic module, and the photovoltaic module is used as the direct current power supply.

The foregoing descriptions are merely specific implementations of this application, but are not intended to limit the protection scope of this application. Any variation or replacement readily figured out by a person skilled in the art in the technical scope disclosed in this application shall fall within the protection scope of this application.

**Claims**

1. A power conversion system, comprising N power conversion units and a control unit, wherein N is an integer and N≥2, a first terminal of each power conversion unit is configured to connect to a direct current power supply or an alternating current power supply, a second terminal of each power conversion unit is configured to connect to a load, an energy storage unit, or a power grid, and the power conversion unit is configured to: perform power conversion on a direct current input by the direct current power supply or an alternating current input by the alternating current power supply, and then output a current obtained through the conversion; and
the control unit is configured to:

control, in a control periodicity, operating modes of one or more target power conversion units in the N power conversion units to be switched between a power reserve, PR mode and a maximum power point tracking, MPPT mode, and update a reference power based on a maximum power obtained in the MPPT mode, for an operating power of the target power conversion unit obtained after switching from the MPPT mode to the PR mode to be an updated reference power, wherein the updated reference power is less than or equal to the maximum power; and control an operating mode of a coordinated power conversion unit other than the target power conversion unit in the N power conversion units to remain unchanged, and control, based on an operating power variation of the target power conversion unit in the mode switching process, an operating power of the coordinated power conversion unit to be coordinately adjusted, for a total variation of operating powers of the N power conversion units to be less than a variation threshold.

2. The power conversion system according to claim 1, wherein the N power conversion units comprise k target power conversion units and m coordinated power conversion units, wherein k is an integer and $1 \leq k \leq N-1$, m is an integer and $1 \leq m \leq N-1$, and $2 \leq k+m \leq N$ is met;

> an operating power variation of each target power conversion unit in the mode switching process comprises a target power variation, and the target power variation is a variation between an instantaneous operating power of the target power conversion unit in the mode switching process and a reference power;
> an operating power variation of each coordinated power conversion unit in the coordinated adjustment process comprises a coordinated power variation, and the coordinated power variation is a variation between an instantaneous operating power of the coordinated power conversion unit in the coordinated adjustment process and a specified power; and
> a sign of a sum of the coordinated power variations is opposite to a sign of a sum of the target power variations, and a difference between an absolute value of the sum of the coordinated power variations and an absolute value of the sum of the target power variations is less than the variation threshold.

3. The power conversion system according to claim 2, wherein each coordinated power variation is determined based on the sum of the target power variations.

4. The power conversion system according to claim 3, wherein a coordinated power variation corresponding to a $y^{th}$ coordinated power conversion unit in the m coordinated power conversion units is: $-\alpha_y * \Delta P_{msm}$, wherein $\alpha_y$ represents an allocation weight corresponding to the $y^{th}$ coordinated power conversion unit, $\alpha_y \in [0,1]$, and $\Delta P_{msm}$ represents the sum of the target power variations.

5. The power conversion system according to claim 2, wherein each coordinated power variation is determined based on a constant coordinated power specified value.

6. The power conversion system according to claim 5, wherein a coordinated power variation corresponding to a $z^{th}$ coordinated power conversion unit in the m coordinated power conversion units is: $-\alpha_z * \Delta P_{syn0}$, wherein $\alpha_z$ represents an allocation weight corresponding to the $z^{th}$ coordinated power conversion unit, $\alpha_z \in [0,1]$, and $\Delta P_{syn0}$ represents the constant coordinated power specified value.

7. The power conversion system according to any one of claims 2 to 6, wherein each coordinated power variation and each target power variation occur in a same phase.

8. The power conversion system according to any one of claims 2 to 6, wherein a phase in which each coordinated power variation occurs is later than a phase in which each target power variation occurs.

9. The power conversion system according to any one of claims 1 to 8, wherein the control unit is further configured to:

> in response to that the sum of the target power variations is greater than or equal to a reference threshold, control, based on the target power variation of the target power conversion unit in the mode switching process, the operating power of the coordinated power conversion unit to be coordinately adjusted based on the specified power, wherein
> the target power variation is the variation between the instantaneous operating power of the target power conversion unit in the mode switching process and the reference power.

10. The power conversion system according to any one of claims 1 to 9, wherein the operating mode of the coordinated power conversion unit is the PR mode, and the operating power of the coordinated power conversion unit is updated with the updated reference power.

11. The power conversion system according to any one of claims 1 to 10, wherein the target power conversion unit is randomly selected from the N power conversion units; and/or the coordinated power conversion unit is randomly selected from the N power conversion units.

12. The power conversion system according to any one of claims 1 to 10, wherein a probability of selecting at least a part of the power conversion units as the target power conversion unit is different; or
a probability of selecting at least a part of the power conversion units as the coordinated power conversion unit is different.

13. The power conversion system according to any one of claims 1 to 10, wherein the target power conversion unit is sequentially selected from the N power conversion units; and/or
the coordinated power conversion unit is sequentially selected from the N power conversion units.

14. The power conversion system according to claim 13, wherein the N power conversion units comprise a first unit group to an $M^{th}$ unit group that are disposed in sequence, any unit group comprises one or more power conversion units, and M is an integer and $M \geq 2$;

a plurality of consecutive cycle periodicities comprise one or a combination of a first cycle periodicity and a second cycle periodicity;
in the first cycle periodicity, one unit group sequentially selected based on a sequence from the first unit group to the $M^{th}$ unit group is used as the target power conversion unit; and
in the second cycle periodicity, one unit group sequentially selected based on a sequence from the $M^{th}$ unit group to the first unit group is used as the target power conversion unit.

15. A power update control method, wherein the method is applied to a power conversion system, the power conversion system comprises N power conversion units, N is an integer and $N \geq 2$, a first terminal of each power conversion unit is configured to connect to a direct current power supply or an alternating current power supply, a second terminal of each power conversion unit is configured to connect to a load, an energy storage unit, or a power grid, and the power conversion unit is configured to: perform power conversion on a direct current input by the direct current power supply or an alternating current input by the alternating current power supply, and then output a current obtained through the conversion; and
the power update control method comprises:

controlling operating modes of one or more target power conversion units in the N power conversion units to be switched between a PR mode and a MPPT mode, and updating a reference power based on a maximum power obtained in the MPPT mode, for an operating power of the target power conversion unit obtained after switching from the MPPT mode to the PR mode to be an updated reference power, wherein the updated reference power is less than or equal to the maximum power; and

controlling an operating mode of a coordinated power conversion unit other than the target power conversion unit in the N power conversion units to remain unchanged, and controlling, based on an operating power variation of the target power conversion unit in the mode switching process, an operating power of the coordinated power conversion unit to be coordinately adjusted, for a total variation of operating powers of the N power conversion units to be less than a variation threshold.

Power supply system

100

200

300

400

Power conversion system

Grid-connected transformer

FIG. 1

FIG. 2a

FIG. 2b

FIG. 3

FIG. 4

FIG. 5

FIG. 6

FIG. 7

X2

T1_1   T1_N−3   T1_N−2   T1_N−1   T1_N

Tm   Tr

210_1
210_2
210_3
210_4
210_N

X1_1 X1_2 X2_1 X2_2

FIG. 8

X1_1 X2_1 X1_2 X2_2 X3_1 X4_1 X3_2 X4_2

FIG. 9

FIG. 10

FIG. 11

FIG. 12

FIG. 13

FIG. 14

FIG. 15a

FIG. 15b

**EUROPEAN SEARCH REPORT**

Europäisches
Patentamt
European
Patent Office
Office européen
des brevets

**Application Number**

EP 24 21 3023

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/340869 A1 (UNRU ALEXANDER [DE] ET AL) 26 November 2015 (2015-11-26) | 1-3,5, 7-15 | INV. H02J1/10 H02J3/38 |
| A | * figures 1-4 * <br> * paragraphs [0040] - [0045] * <br> - - - - - | 4,6 | |
| A | US 2023/318307 A1 (THOMPSON CHRISTOPHER [US] ET AL) 5 October 2023 (2023-10-05) <br> * paragraphs [0051] - [0054] * <br> - - - - - | 1-15 | |
| A | US 2021/098993 A1 (SHI RONGLIANG [CN] ET AL) 1 April 2021 (2021-04-01) <br> * paragraphs [0070] - [0076] * <br> - - - - - | 1-15 | |
| A | US 2022/329075 A1 (LIU WEI [CN] ET AL) 13 October 2022 (2022-10-13) <br> * paragraphs [0039] - [0052] * <br> - - - - - | 1-15 | |

**TECHNICAL FIELDS SEARCHED (IPC)**

H02J

The present search report has been drawn up for all claims

| Place of search | Date of completion of the search | Examiner |
|---|---|---|
| Munich | 5 March 2025 | Berger, Josef |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 557 552 A1**

## ANNEX TO THE EUROPEAN SEARCH REPORT
## ON EUROPEAN PATENT APPLICATION NO.

EP 24 21 3023

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2025

| Patent document cited in search report | | | Publication date | Patent family member(s) | | | Publication date |
|---|---|---|---|---|---|---|---|
| US 2015340869 | A1 | | 26-11-2015 | CN | 104885322 | A | 02-09-2015 |
| | | | | EP | 2951903 | A1 | 09-12-2015 |
| | | | | JP | 6334563 | B2 | 30-05-2018 |
| | | | | JP | 2016510586 | A | 07-04-2016 |
| | | | | US | 2015340869 | A1 | 26-11-2015 |
| | | | | WO | 2014118059 | A1 | 07-08-2014 |
| US 2023318307 | A1 | | 05-10-2023 | CN | 116896060 | A | 17-10-2023 |
| | | | | EP | 4254703 | A1 | 04-10-2023 |
| | | | | JP | 2023147281 | A | 12-10-2023 |
| | | | | US | 2023318307 | A1 | 05-10-2023 |
| US 2021098993 | A1 | | 01-04-2021 | CN | 109802426 | A | 24-05-2019 |
| | | | | EP | 3783765 | A1 | 24-02-2021 |
| | | | | US | 2021098993 | A1 | 01-04-2021 |
| | | | | US | 2022231511 | A1 | 21-07-2022 |
| | | | | WO | 2020098242 | A1 | 22-05-2020 |
| US 2022329075 | A1 | | 13-10-2022 | CN | 112994107 | A | 18-06-2021 |
| | | | | EP | 4071957 | A1 | 12-10-2022 |
| | | | | ES | 2985708 | T3 | 07-11-2024 |
| | | | | US | 2022329075 | A1 | 13-10-2022 |

EPO FORM P0459

For more details about this annex : see Official Journal of the European Patent Office, No. 12/82